(19) Europäisches Patentamt
European Patent Office
Office européen des brevets

(11) **EP 3 405 671 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(21) Anmeldenummer: **17700545.1**

(22) Anmeldetag: **18.01.2017**

(51) Int Cl.:
*F03D 9/32* *(2016.01)*       *F03D 1/04* *(2006.01)*
*B60L 8/00* *(2006.01)*       *B60K 3/04* *(2006.01)*
*B60K 16/00* *(2020.01)*     *B61D 43/00* *(2006.01)*

(86) Internationale Anmeldenummer:
**PCT/EP2017/050936**

(87) Internationale Veröffentlichungsnummer:
**WO 2017/125409 (27.07.2017 Gazette 2017/30)**

(54) **TURBINENSYSTEM ZUR EINSPARUNG VON ENERGIE BEI EINEM FAHRZEUG**

WIND TURBINE FOR SAVING FUEL IN A VEHICLE

ÉOLIENNE DESTINEE A ECONOMISER DU CARBURANT DANS UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2016   DE 102016100716**
**31.05.2016   EP 16172177**

(43) Veröffentlichungstag der Anmeldung:
**28.11.2018   Patentblatt 2018/48**

(73) Patentinhaber: **Albrecht, Peter**
**14089 Berlin (DE)**

(72) Erfinder: **Albrecht, Peter**
**14089 Berlin (DE)**

(74) Vertreter: **Hertin und Partner**
**Rechts- und Patentanwälte PartG mbB**
**Kurfürstendamm 54/55**
**10707 Berlin (DE)**

(56) Entgegenhaltungen:
**FR-A1- 2 868 361       JP-A- 2011 226 414**
**KR-A- 20130 023 413   US-A- 3 970 163**
**US-A1- 2007 240 915   US-A1- 2008 011 523**

**Beschreibung**

Die Erfindung betrifft ein Turbinensystem zur Einsparung von Energie bei einem Fahrzeug.

**Hintergrund und Stand der Technik**

Die potentielle Nutzung von Fahrtwindenergie bei Fahrzeugen mit Hilfe von Windrädern hat verschiedene Erfindungen inspiriert. Teilweise erfolgt dabei eine Umwandlung des kinetischen Fahrtwindes in nutzbare, elektrische Energie und deren Speicherung in Batterien.

In der DE202008015733U1 werden beispielsweise Windräder vorgeschlagen, welche auf Dächern von Fahrzeugen, insbesondere von Zügen montiert werden können. Während der Fahrt treibt der Fahrtwind die an Generatoren angeschlossenen Windräder an um dadurch elektrischen Strom zu erzeugen. Auf Grund der Anbringung der Windräder auf den Dächern der Fahrzeuge erhöht sich jedoch der Luftwiderstand in stärkerem Maße. Bei dieser Konstruktionsweise ist der durch den Luftwiderstand erhöhte Treibstoffbedarf höher als die durch die Windräder erzeugte elektrische Energie. Die Gesamtenergiebilanz und somit das Treibstoffeinsparpotential ist daher negativ.

In der DE20308468U1 wird ein Verbrennungsmotor/Elektromotor-Kraftwagen mit Komplexgeneratoren vorgeschlagen, bei welchem der Fahrtwind zur Erzeugung von Strom während des Abbremsens des Fahrzeuges genutzt wird. Dadurch kann somit zwar Strom erzeugt werden, ohne dass ein erhöhter Luftwiderstand zu einem erhöhten Treibstoffverbrauch führt. Das Treibstoffeinsparpotential ist durch diese restriktiven Randbedingungen jedoch gering.

In der CH 700 463 A2 werden Windturbinen für ein Fahrzeug beschrieben, welche von dem das Fahrzeug umgebenen Luftstrom während der Fahrt angetrieben werden. Die Anordnung der Turbinen am Fahrzeug wie bspw. am Außenspiegel oder am Spoiler führen zu erhöhten Strömungsverlusten. Weiterhin ist die Leistungsaufnahme der Windturbinen aufgrund ihrer kleinen Abmaße zu gering um zu einer signifikanten Treibstoffeinsparung zu führen.

In der US 2008 / 0011523 A1 wird eine Windturbine im Frontbereich eines Nutzfahrzeuges beschrieben, welche einen signifikanten Bereich der Fahrzeugfront abdeckt. Durch die Windturbine soll ein Teil der Staudruckenergie in mechanische Energie umgewandelt, ohne den Bewegungswiderstand des Fahrzeuges signifikant zu vergrößern. Nachteilig ist es, dass es insbesondere am äußeren Rand der Windturbine zu verlustbehafteten Umströmungen und Verwirbelungen kommt. Weiterhin erfolgt in der US 2008 / 0011523 A1 nur eine mäßige Geschwindigkeitsreduktion der auf die Fahrzeugfront einströmenden Luft, sodass nur eine geringe Treibstoff-Einsparung erreicht werden kann.

Im bekannten Stand der Technik wird durch die Kombination von Windturbinen und einem Fahrzeug somit eine Treibstoff-Einsparung nur unter speziellen Randbedingungen wie z.B. wenn der Bewegungswiderstand des Fahrzeuges nicht signifikant vergrößert wird oder beim Abbremsen des Fahrzeuges, ähnlich einer Energie-Rückgewinnung bei Elektromotoren erzeugt oder gar keine aufgrund einer starken Erhöhung des Luftwiderstandes durch die Windräder. Insbesondere führen die im Stand der Technik bekannten Ausführungsformen der Windräder zu keiner vollständigen Abdeckung der frontalen Projektionsfläche des Fahrzeuges und nur zu einer mäßigen Absenkung der Fahrtwindgeschwindigkeit, was den Effekt der aerodynamischen Widerstandsreduktion am Fahrzeug erheblich reduziert. Auch die z.T. kleinen bekannten Abmessungen der Windräder führen zu relativ große Strömungsverluste aufgrund von Verwirbelungen an den Schaufel-Hinterkanten. Dies ist selbst dann der Fall, wenn Schaufelblätter mit einer sehr guten aerodynamischen Formgebung gewählt werden. Weiterhin werden im Stand der Technik die Windräder an Orten auf dem Fahrzeug positioniert, wo diese weit außerhalb der Fahrzeuggrenzschicht ragen und schon dadurch zusätzliche Verluste generieren.

Eine Aufgabe der Erfindung war es somit, ein System bereit zu stellen, welches die genannten Nachteile des Standes der Technik beseitigt. Eine weitere Aufgabe der Erfindung war es ein System bereitzustellen, welches den Fahrtwind energetisch nutzt um den Treibstoffverbrauch zum Antrieb des Fahrzeuges zu reduzieren.

**Zusammenfassung der Erfindung**

Die Aufgabe der Erfindung wird durch den Gegenstand des unabhängigen Anspruchs gelöst. Die abhängigen Ansprüche betreffen bevorzugte Ausführungsformen der Erfindung.

In einer bevorzugten Ausführungsform betrifft die Erfindung eine Kombination aus Fahrzeug und Turbinensystem gemäß Anspruch 1.

Für die Anwendung des Turbinensystems zur Treibstoffeinsparung bei Fahrzeugen mit einer Fahrtgeschwindigkeiten von bis zu ca. 400 km/h wird unter einer Turbine bevorzugt eine Windturbine bzw. ein Windrad verstanden, welches durch den Fahrtwind angetrieben wird und dadurch für das Fahrzeug nutzbare Energie bereitstellt. Bevorzugt wird die Windturbine bei einer Vorwärtsbewegung des Fahrzeuges zur Rotation angetrieben. Die dadurch bereit gestellte Rotationsenergie kann bevorzugt entweder mechanisch an die Antriebswelle des Motors des Fahrzeuges weitergegeben werden oder bevorzugt in elektrische Energie umgewandelt werden. Für die Anwendung des Turbinensystems zur Treibstoffeinsparung bei Fahrzeugen mit Fahrtgeschwindigkeiten größer als ca. 400 km/h kann die Aufgabe durch eine selbst angetriebene und auf eine definierte Reisegeschwindigkeit optimierte Gasturbine (bevorzugt Aero-Derivativ) übernommen werden, welche durch den vorhandenen Fahrtwind mit einem größeren Eintrittsdruck arbeitet (Turbolader-Prinzip) und dadurch für das Fahrzeug zusätzlich nutzbare Energie bereitstellt. Es sei an dieser Stelle angemerkt, dass der energie-effiziente Einsatz einer Gasturbine in Zusammenhang mit der Erfindung bei speziellen Anwendungen z.B. bei Hochgeschwindigkeitszügen bereits ab 200km/h sinnvoll ist.

Unter dem Begriff der "Turbine" werden bevorzugt rotierende Strömungsmaschinen verstanden, welche einen Teil der kinetischen Energie der auf das Fahrzeug während der Fahrt einströmenden Luft in mechanische Leistung umwandelt, d.h. insbesondere in die Rotation einer Welle überführt. Diese mechanische Leistung in Form der rotierenden Welle kann an den Motor des Fahrzeuges weitergeleitet werden oder der Erzeugung von elektrischem Strom dienen. Bevorzugte Ausführungsformen der Turbine sind Windturbinen oder Gasturbinen (Aeroderivative). Die zentrale Achse der rotierenden Bauelemente der Turbine, z.B. Rotorblätter, wird auch als Drehachse bezeichnet.

Unter dem Begriff der "Querschnittsfläche der Turbine" wird bevorzugt die projizierte Rotationsfläche der Turbine verstanden, welche die Turbine bei einer Projektion entlang der senkrechten Achse zur Rotationsrichtung der Turbine umfasst. Im Falle einer Windturbine bzw. eines Windrades umfassend Rotorblätter mit einer Länge L entspricht die Querschnittsfläche bevorzugt $\pi L^2$. Die Länge der Rotorblätter entspricht bevorzugt dem Abstand von der Rotationsachse der Windturbine bis zu dem radial von dieser Achse am weitesten entfernten Ende des Rotorblattes (Spitze des Rotorblattes). Die Querschnittsfläche der Turbine entspricht somit im Sinne der Erfindung nicht der statischen Querschnittsfläche der Turbine im Stillstand sondern quantifiziert jene Fläche der Turbine, welche die Turbine während der Rotation aufspannt.

Unter dem Begriff der "Querschnittsfläche des Windschildes und der Turbine" wird bevorzugt die Querfläche verstanden, welche zusammen von dem Windschild und der Turbine aufgespannt wird. Da das Windschild die Turbine im Querschnitt zur Fahrtrichtung umrandet, entspricht die gemeinsame Querschnittsfläche des Windschildes und der Turbine bevorzugt der Querfläche, welche von der Außenkontur des Windschildes aufgespannt wird. Besonders bevorzugt ist das Windschild z.B. ein ringförmiges Gehäuse, welches die Turbine umrandet. Hierbei ist der Innendurchmesser des Windschildes größer als der Außendurchmesser der Turbine, welcher im Falle einer Windturbine der Länge der Rotorblätter entspricht. Die Außenkontur des ringförmigen Windschildes spannt die gemeinsame Querfläche auf. Es ist die Querschnittsfläche des Windschildes und der Turbine, welche im Sinne der Erfindung eine möglichst komplette Abdeckung der Fahrzeugfront gewährleisten sollte.

Unter der "Fahrzeugfront" wird im Sinne der Erfindung bevorzugt der Bestandteil des Fahrzeuges bezeichnet, welcher sich in Fortbewegungsrichtung des Fahrzeuges vorne befindet. Bevorzugt umfasst der Begriff Fahrzeugfront die gesamte vordere Fläche des Fahrzeuges auf welcher der Fahrtwind während der Fortbewegung des Fahrzeuges einwirkt.

Mit dem Begriff "der frontalen Projektionsfläche des Fahrzeuges" wird im Sinne der Erfindung bevorzugt jene Fläche bezeichnet, welche das Fahrzeug aufweist, wenn eine zweidimensionale Projektion des Fahrzeuges entlang der Achse der Fortbewegung des Fahrzeuges erfolgt. Die frontale Projektionsfläche des Fahrzeuges ist im Sinne der Erfindung daher bevorzugt eine Quantifizierung der frontalen Fläche des Fahrzeuges, auf welche bei der Fahrt der Fahrtwind einwirkt.

Bei der Fortbewegung bekannter Fahrzeuges ohne eine erfindungsgemäße Turbine kommt es zu einer Generation eines Staudruckes vor der Fahrzeugfront. Der Staudruck bezeichnet im Sinne der Erfindung bevorzugt eine Erhöhung des Druckes vor der Fahrzeugfront in Abhängigkeit der Fahrtgeschwindigkeit. Der Staudruck wirkt der Fahrzeugbewegung entgegen und erhöht somit die Widerstandskraft, welche der Antrieb des Motors aufbringen muss, um eine Fortbewegung zu ermöglichen (vgl. Equ. 1).

Erfindungsgemäß kommt es durch die Mindestgröße der Querschnittfläche der Turbine und des Windschilds im Vergleich zur frontalen Projektionsfläche des Fahrzeuges zu einer überraschenden Verminderung des Staudruckes und damit zu einer überraschenden Verlangsamung des Fahrtwindluftstromes. Bei der Fahrt treffen die Luftmassen anstatt auf die Fahrzeugfront auf die Turbine und das Windschild. Durch den Antrieb der Turbine wird der strömenden Luft kinetische Energie entnommen, so dass diese stromabwärts vor der Fahrzeugfront eine geringe Geschwindigkeit aufweist und für einen geringen Staudruck sorgt. Dieser Effekt wird mithilfe des Windschilds noch verstärkt. Indem sich das verlangsamte Luftvolumen in dessen Windschatten weiter aufweitet und der energiereiche Fahrtwind von der Fahrzeugfläche ferngehalten wird legen sich die verlangsamten Luftschichten als widerstandsreduzierende "Luftblase" um das gesamte Fahrzeug. Insbesondere durch eine wesentliche langsame Umströmung des Fahrzeuges entstehen entlang und an der Hinterkante des Fahrzeuges wesentlich kleinere aerodynamische Verluste z.B. Verwirbelungen. Damit geht eine Reduktion der axialen Fahrwiderstand-Kraft einher, welche betragsmäßig größer als die neu generierten Turbinen-Axialkräfte ist und führt somit zu einer Reduktion der Gesamt-Fahrwiderstands-Kraft insbesondere für die Fahrzeugfront von handelsüblichen LKWs (Cw-Wert ca. 0,65). Dies führt überraschenderweise bereits ohne Ausnutzung einer Windturbinenleistung zu einer Treibstoffeinsparung bei Fahrzeugen, welche das erfindungsgemäße Turbinensystem nutzen. Eine solche Reduktion der Gesamt-Fahrwiderstands-Kraft u.a hervorgerufen durch einen verlangsamten Luftstrom um das Fahrzeug herum und einem reduzierten Staudruck, konnte von einem Fachmann nicht erwartet werden. Insbesondere können die Windturbinen, welche aus dem Stand der Technik bekannt sind, nur begrenzt die Luftströmung verlangsamen und immer nur einen Teil der Projektionsfläche von den Fahrzeugfronten abdecken. Die Reduktion des aerodynamischen Widerstandes z.B. durch eine verlangsamte Luftströmung am Fahrzeugende wird dadurch erheblich eingeschränkt und damit nur eine sehr geringe Energieeinsparung erreicht.

Beim Stand der Technik ist eine signifikante Abnahme der Fahrwiderstandskraft am Fahrzeug immer mit einer signifikanten Zunahme der Windturbinen-Axialkräfte gekoppelt. Insbesondere bei kleinen Cw-Werten übersteigen die Windturbinen-Axialkräfte deutlich die eingesparte Fahrwiderstands-Kraft (vgl. Fig.. 17). Das bei der Erfindung eingesetzte Windschild führt zu einer deutlichen Entkopplung von Windturbinen-Axialkraft und Fahrwiderstandskraft am Fahrzeug.

Die Treibstoffeinsparung durch die erfindungsgemäße Turbine mit einer Mindestgröße und dem dazugehörigen Windschild stellt eine Abkehr vom Stand der Technik dar und ist ein überraschender Effekt, welcher erfindungsgemäß erkannt wurde.

Die signifikante Treibstoffeinsparung mithilfe des Turbinensystems wird bevorzugt aufgrund der Kombination dreier auftretender physikalischer Prinzipien erreicht.

Das 1. Prinzip beruht auf der Umwandlung eines Teils der im Fahrtwind enthaltenen kinetischen Energie in mechanische Energie z.B. durch eine Windturbine bei Fahrtgeschwindigkeiten bis bevorzugt ca. 400km/h. Bei Fahrtgeschwindigkeiten größer als bevorzugt 400km/h bis ca. 1000km/h ist die Energieumwandlung durch z.B. eine axiale Gasturbine zur Stromerzeugung realisierbar. Bei einer Windturbine bei Fahrtgeschwindigkeiten bis ca. 400km/h kann die mechanische Energie bevorzugt zum Fahrzeug-Motor weitergeleitet und diesen direkt entlasten. Dies führt zu einer signifikanten Treibstoffeinsparung. Darüber hinaus kann die mechanische Energie im Falle einer axialen Gasturbine zur Stromerzeugung genutzt werden und bei Fahrzeugen, welche durch Strom angetrieben werden ebenfalls zu einer Treibstoffreduktion führen.

Das 2. Prinzip beruht auf einer Reduktion der Strömungsverluste durch einen die durch die Turbine reduzierten Staudruck an der Fahrzeugfront und einer durch die Turbine und Windschild verlangsamte Luftströmung, um das Fahrzeug. Vorteilhafterweise wird durch die Reduktion des Staudruckes und der Verlangsamung der Luftmassen vor der Fahrzeugfront die Widerstandskraft, welche das Fahrzeug gegen den Fahrtwind aufbringen muss erheblich reduziert. Dies ist ein überraschender Effekt des erfindungsgemäßen Turbinensystems. Durch die Aufnahme des zusätzlichen Bestandteiles der Turbine und des Windschilds wird der Luftwiderstand auf die Fahrzeugfront nicht erhöht, sondern vorteilhafterweise reduziert.

Das 3. Prinzip beruht auf einer Betrachtung der axialen Gesamtkraft, d.h. der wirkenden Kräfte in Fahrtrichtung.

Die axiale Gesamtkraft mit und ohne Verwendung der Windturbine und des Windschilds - insbesondere bei Fahrzeugen mit einem Cw-Wert von ungefähr 0,6 - bleibt annähernd gleich. D.h. dass unter Verwendung eines erfindungsgemäßen Turbinensystems die eingesparten axialen Widerstandskräfte und die zusätzlich axial erzeugten Strömungskräfte aufgrund der

Windturbine kompensiert werden. Aufgrund einer Weitergabe der mechanischen Rotationsenergie der Windturbine an den Fahrzeug-Motor kann bei diesen Geschwindigkeiten eine besonders signifikante Treibstoffeinsparung erreicht werden. Bei Fahrzeugen mit einem Cw-Wert größer als ungefähr 0,6 kann die Gesamtkraft bei Verwendung der Windturbine sogar reduziert werden. Bei Fahrzeugen mit einem Cw-Wert kleiner als ungefähr 0,6 kann es dazu kommen, dass sich die Gesamtkraft bei Verwendung der Windturbine und des Windschilds erhöht, sodass eine Treibstoffeinsparung in diesem Fall durch Ausnutzung der mechanischen Rotationsenergie der Windturbine z.B. durch Einkopplung in den Fahrzeugmotor oder durch Erzeugung von elektrischem Strom und Entlastung anderer Verbraucher, erreicht werden kann.

Im Sinne der Erfindung wird unter der Angabe "ungefähr", "ca.", "nahezu", "annährend" oder synonymen Begriffen bevorzugt eine Angabe von Werten, Formen oder anderen Beschreibungen technischer Merkmale verstanden, welche sowohl die exakte Angabe als auch eine Angabe mit einer Toleranzspanne umfasst. Für qualitative Merkmale wird die Toleranzspanne durch das Wissen des durchschnittlichen Fachmannes, insbesondere im Hinblick auf die Funktionalität des technischen Merkmales definiert. Für quantitative Merkmale, wie z.B. die Angabe von ungefähren Werten, beträgt die gemeinte Toleranzspanne bevorzugt $\pm$ 10%, besonders bevorzugt $\pm$ 5%. Als ganz besonders bevorzugte Ausführungsform offenbart eine ungefähre Angabe stets auch die exakte Angabe. D.h. unter der Angabe ungefähr 5, wird neben Werten, welche innerhalb einer Toleranzspanne liegen (z.B. 5,1, 4,9 etc.) stets auch der exakte Wert 5 offenbart.

Bei Vorwärtsgeschwindigkeiten ab bevorzugt 400 km/h (bei speziellen Anwendungen auch bereits ab 200 km/h) bis bevorzugt 1000km/h wird bei Verwendung eines Turbinensystems, mit einer Gasturbine (Aeroderivativ) und Windschild, der Treibstoffverbrauch signifikant kleiner sein, als bei einem Fahrzeug ohne Turbinensystem. Dies ist hauptsächlich auf den energiearmen Abgasstrom der Gasturbine (Aeroderivativ) zurückzuführen, welcher an der Fahrzeugfront zu einem reduzierten Staudruck führt und den aerodynamischen Widerstand entlang der Fahrzeugoberfläche signifikant reduziert. Überraschenderweise erhöht die Gasturbine (Aeroderivativ) nicht den Luftwiderstand des Fahrzeuges, sondern vermindert diesen. Darüber hinaus kann der verbesserte Wirkungsgrad der Gasturbine (Aeroderivativ) bei elektrisch betriebenen Fahrzeugen, wie bspw. Zügen, zu einer Reduktion des Treibstoffes genutzt werden.

Unter dem Begriff "Treibstoffeinsparung" wird im Sinne der Erfindung bevorzugt eine Erhöhung der Energieeffizienz zum Antrieb des Fahrzeuges verstanden. Erfindungsgemäß wird dies durch eine Reduktion des Staudruckes auf die Fahrzeugfront durch die erfindungsgemäße Turbine und dem Windschild sowie einer Nutzung der durch die Turbine bereitgestellten Energie erreicht. Zur Nutzung der durch die Turbine bereitgestellten Energie kann die mechanische Energie beispielsweise direkt in einen Motor des Fahrzeuges gekoppelt werden. Es kann aber auch bevorzugt sein, dass die Turbine die mechanische Energie des Luftstromes in elektrischen Strom umwandelt und der erzeugte elektrische Strom wird zum Antrieb des Fahrzeuges genutzt. In diesem Falle entspricht der "Treibstoff" der elektrischen Energie zum Antrieb des Fahrzeuges. Es kann aber auch bevorzugt sein, dass die von der Turbine bereitgestellte Energie indirekt zur Treibstoffeinsparung genutzt wird. Beispielsweise kann die Turbine elektrischen Strom generieren, welcher von Geräten des Fahrzeuges, wie bspw. Radios, Kühlschränke etc. genutzt wird. Ohne die Turbine würde der elektrische Strom zum Betreiben dieser Geräte durch den Motor des Fahrzeuges bereitgestellt werden. Hierzu wird beispielsweise bei LKWs mit einem Dieselmotor zusätzlicher Diesel-Treibstoff verbraucht. Durch die unabhängige Stromversorgung der elektrischen Geräte mit Hilfe der Turbine, kann der Motor entlastet werden. Dies führt im Sinne der Erfindung somit ebenfalls zu einer Treibstoffeinsparung. Im Sinne der Erfindung kann die Treibstoffeinsparung somit auch durch die Bereitstellung von nutzbarer Energie durch die Turbine charakterisiert werden, wobei die nutzbare Energie größer ist, als ein eventuelle Energieverlust aufgrund eines zusätzlichen Strömungswiderstand der Turbine.

Unter dem Begriff "nutzbare Energie" wird bevorzugt jede Energieform verstanden, welche direkt oder indirekt zur Treibstoffeinsparung des Fahrzeuges führt. Erfindungsgemäß wandelt die Turbine die mechanische Energie des einströmenden Fahrtwindes zumindest teilweise in nutzbare Energie um und erhöht dadurch die Energieeffizienz des Gesamtsystems aus Fahrzeug und Turbine.

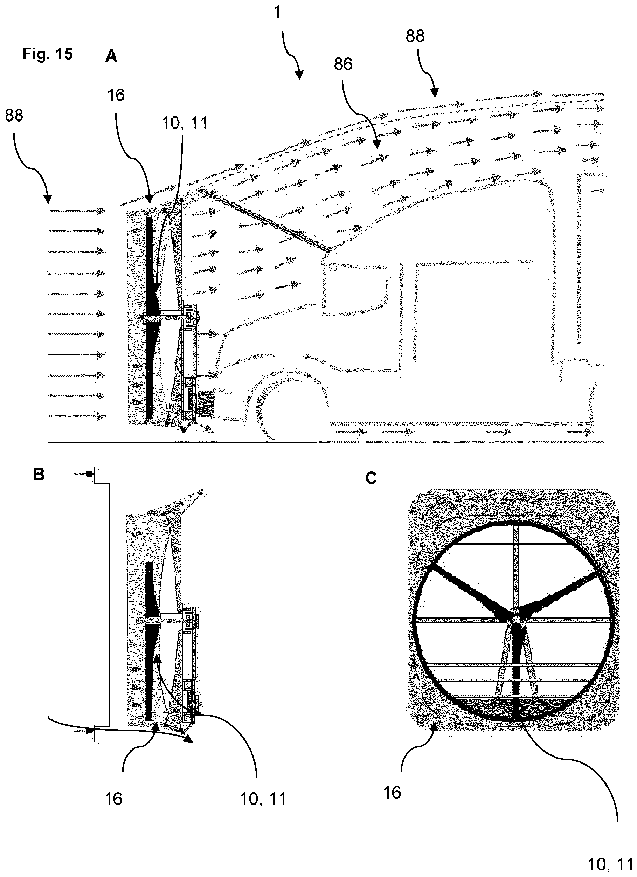

Ein wesentlicher Vorteil der Erfindung gegenüber dem Stand der Technik ist weiterhin die, nahezu unabhängig vom Betriebszustand der Turbine einstellbare niedrige Geschwindigkeit des Windschatten-Luftstroms (vgl. Fig. 15). Als Windschatten-Luftstrom wird bevorzugt der Luftstrom bezeichnet, welcher nach Passieren der Turbine auf die Fahrzeugfront trifft und das Fahrzeug ummantelt. Eine niedrige Geschwindigkeit des Windschatten-Luftstroms am Fahrzeug erzeugt wesentlich kleinere Strömungsverluste z.B. aufgrund eines wesentlich kleineren Nachlaufgebietes am Fahrzeugende. Die Erfindung gewährleistet selbst bei einer niedrigen Turbinenleistung noch eine ausreichend große Reduktion der Windschatten-Lustromgeschwindigkeit und unterscheidet sich damit signifikant vom Stand der Technik. Das ist insbesondere dann wichtig, wenn sich der Bewegungswiderstand des Fahrzeuges mit und ohne diese Vorrichtung kaum vergrößern soll.

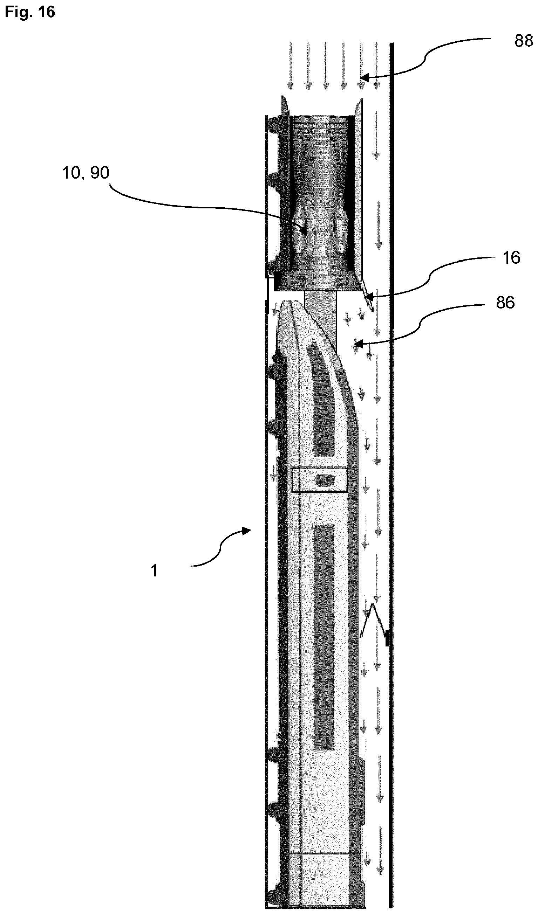

Das Turbinensystem umfasst zu diesem Zweck als Hauptbestandteil das sogenannte Windschild mit z.B. integrierter Windturbine oder Gasturbine (Aeroderivativ), welche im Frontbereich des Fahrzeuges derart angebaut sind, dass möglichst beide Komponenten die gesamte frontale Projektionsfläche des Fahrzeuges abdecken (vgl. Fig. 15 u. Fig. 16).

Eine einzelne Windturbine bzw. eine einzelne Gasturbine mit maximal möglichem Durchmesser in Bezug auf die Größe der Fahrzeugfront, weist aufgrund physikalischer Gesetzmäßigkeiten kleinere Strömungsverluste als mehrere kleinere Turbinen und ist somit einem Verbund aus Turbinen mit kleineren Durchmessers vorzuziehen.

Durch das Windschild wird ein Teil des energiereichen Fahrtwindes, welcher auch als Energie-Luftstrom bezeichnet wird, am Fahrzeug vorbeigelenkt, während der andere energiereiche Anteil durch die Turbine strömt und das Volumen auf der Leeseite, d.h. der Rückseite, des Windschildes auffüllt. Der Luftstrom, welcher durch die Turbine strömt, wird bevorzugt als Windschatten-Luftstrom bezeichnet. Energie - und Windschatten-Luftstrom weisen unmittelbar stromabwärts vom Windschild eine signifikante Geschwindigkeitsdifferenz auf, welche hauptsächlich auf eine signifikante Geschwindigkeitsreduktion des Windschatten-Luftstroms im Bezugssystem des Fahrzeuges zurückzuführen ist (vgl. Fig. 15).

Die Geschwindigkeitsreduktion wird hierbei einerseits durch die Umwandlung von kinetischer in nutzbare Energie beim Passieren der Turbine und andererseits zu einem erheblichen Teil durch das signifikante Aufweiten des Windschatten-Luftstroms auf der Rückseite des Windschilds erreicht. An der axialen Position der Rotorblattvorderkante sollte der Durchmesser der Innenseite des Windschildes bevorzugt mindestens dem Außendurchmesser der Turbine entsprechen und weiter stromab anwachsen, sodass die erhaltene Luftströmung dem natürlichen Stromlinienverlauf entlang einer vom Wind betriebenen Windturbine ohne Windschild möglichst nahe kommt. Weiterhin sollte sowohl die Innenseite, als auch Außenseite des Windschilds möglichst derart aerodynamisch ausgelegt sein, sodass sowohl der Energie-Luftstrom als auch der Windschatten-Luftstrom verlustfrei umgelenkt bzw. aufgeweitet werden können und eine störungsarme und wirbelarme Zusammenführung beider Luftströme (Scherschicht) an der Hinterkante gewährleistet werden kann.

Um eine besonders ablöse- und drallarme Strömung stromab von einer Turbine zu gewährleisten, können verschiedene weitere aerodynamische Maßnahmen eingesetzt werden.

Besonders bevorzugte Maßnahmen zur Gewährleistung eines ablösearmen Aufweitens des Windschatten-Luftstroms sind z.B.:

- Anbringen von Luftschlitzen am Windschild, um energiereiche Strömung (Energie-Luftstrom) an ablösegefährdete Stellen zu führen bzw. energiearme Strömung (Windschattenluftstrom) an ablösegefährdete Stellen abzusaugen (Venturi-Effekt)

- Rotorblattspitzenausblasung (ähnlich dem Enfield-Andreau-Rotor)

- Begrenzung des Aufweitungswinkels

Bevorzugte Maßnahmen um eine drallarme Strömung zu gewährleisten umfassen z.B.:

- Große Schnelllaufzahl (Verhältnis Rotorblattspitzen- zu Fahrtwindgeschwindigkeit) zw. 4-7

- Anbringen von Finnen an der Innenseite des Windschilds

- Installation von aerodynamische Profilstreben stromab zur Strömungsumlenkung und Einleiten der Windschildkräfte in die Windturbinenaufhängung

- Anbringen von Finnen an der Außenseite des Windschilds insbesondere zur Angleichung des Restdralls vom Windschattenluftstrom oder bei einem sich mitrotierenden Windschild

Der Fachmann weiß, wie mit den vorgenannten Maßnahmen das erfindungsgemäße Turbinensystem ausgestaltet werden kann, um eine besonders ablöse- und drallarme Strömung zu gewährleisen.

Ein weiterer Vorteil des Windschildes ist zudem eine sicherheitstechnische Funktion. Im Fall eines Bruchs von rotierenden Teilen der Turbine z.B. eines Windturbinenblatt, wird durch das Windschild verhindert, dass diese unkontrolliert aufgrund der Fliehkraft in die Umgebung geschleudert werden.

Anhand eines Fallbeispiels soll folgend gezeigt werden, wie sich mithilfe des erfindungsgemäßen Turbinensystem insbesondere unter einer Vielzahl von Randbedingungen ein Gebiet mit langsamen Windschatten-Luftstrom um das Fahrzeug herausbilden kann. Dies stellt einen wesentlich Unterschied und Vorteil gegenüber Windturbinen des Standes der Technik, welche beispielsweise aus der US 2008/0011523 A1 bekannt sind und kein Windschild aufweisen.

Der Bewegungswiderstand eines Fahrzeuges ohne Turbinensystem setzt sich im Wesentlichen aus folgenden Komponenten zusammen:

- Rollwiderstand,

- Fahrtwind-Widerstand des Fahrzeuges

Bei einem Fahrzeug mit einem erfindungsgemäßen Turbinensystem kommen noch zwei weitere Komponenten hinzu:

- Fahrtwind-Widerstand des Windschildes

- axiale aerodynamische Kräfte der Windturbine (Fahrtwindwiderstandsanteil Windturbine)

Wenn sich der Bewegungswiderstand des Fahrzeuges bei einer angenommen konstanten Fahrzeuggeschwindigkeit mit und ohne Turbinensystem kaum vergrößern soll, dann sollten die zusätzlichen zwei Widerstands-Komponenten kompensiert werden. D.h. bevorzugt sollte der Fahrtwind-Widerstand des Windschildes und die axiale aerodynamische Kräfte der Windturbine durch den Fahrtwind-Widerstand des Fahrzeuges kompensiert werden, Der Rollwiderstand eignet sich hierfür nicht, da dieser unabhängig vom Vorhandensein eines Turbinensystems ist.

Der Fahrtwind-Widerstand bei einem Fahrzeug lässt sich mithilfe des erfindungsgemäßen Turbinensystems signifikant absenken, wobei stets ein Absenken unabhängig vom Cw-Wert des Fahrzeuges erfolgt. Dabei ist aber zu beachten, dass der eingesparte Betrag des Fahrtwind-Widerstandes bei Fahrzeugen mit großem Cw-Wert größer ist als bei Fahrzeugen mit kleinerem Cw-Wert.

Folglich müssen zur Wahrung eines konstanten Bewegungswiderstandes des Fahrzeuges auch die aerodynamischen Axialkräfte der Windturbine (Auftriebskräfte bzw. Fahrtwindwiderstandsanteil Windturbine) entsprechend angepasst werden.

Diese sind stark von der Leistungsabgabe der Windturbine abhängig. Bei hoher Leistungsabgabe der Windturbine nehmen die aerodynamischen Axialkräfte der Windturbine signifikant zu, welche nur durch einen betragsmäßig ähnlichen Fahrtwind-Widerstandwert des Fahrzeuges mit einem erfindungsgemäßen Turbinensystem wieder kompensiert werden. Bei einem großem Cw-Wert ist die Fahrtwind-Widerstands-Ersparnis mit dem erfindungsgemäßen Turbinensystem hoch, sodass diese, wie in diesem Fallbeispiel angenommen, gerade die aerodynamischen Axialkräfte bei maximaler Windturbinenleistung ausgleichen können und damit die oben genannte Anforderung gewahrt bleibt.

Bei einem kleinen Cw-Wert ist die Fahrtwind-Widerstands-Ersparnis vom Betrag kleiner als bei großen Cw-Wert und dementsprechend muss auch die Leistungsabgabe der Windturbine kleiner sein, um die oben genannte Anforderung zu wahren. Die Geschwindigkeit des Windschatten-Luftstroms wird dadurch nur unwesentlich beeinflusst, weil der Luftstrom zu einem erheblichen Teil mithilfe des Windschildes verlangsamt wird, indem es diesen aufweitet. Dadurch kann auch bei kleinerer Windturbinen-Leistung eine signifikante Fahrtwind-Widerstands-Reduktion beim Fahrzeug mithilfe der Erfindung erreicht werden.

Führt man dieses Fallbeispiel nun mit einem Fahrzeug mit und ohne einem Turbinensystem durch, welches kein Windschild aufweist, dann stellt man einen fundamentalen Unterschied fest.

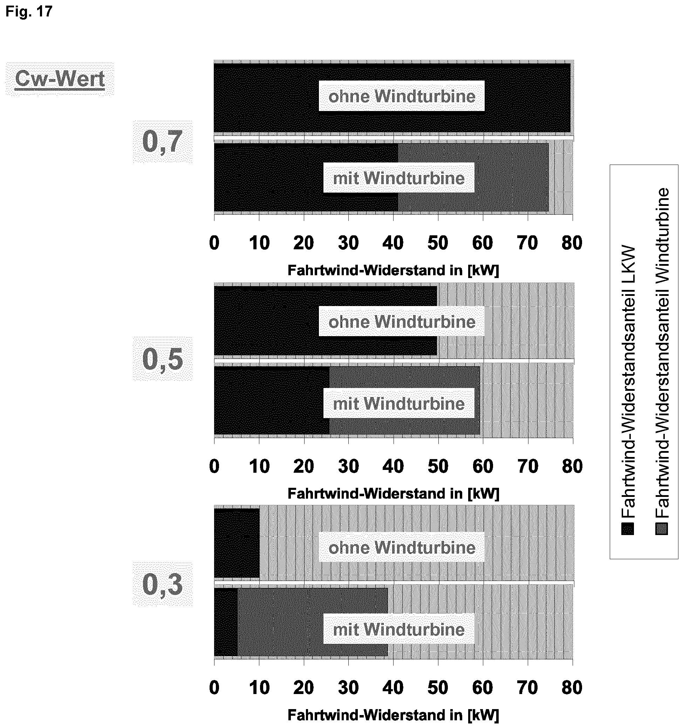

Ohne ein Windschild wird nur die Windturbine zur Ausbildung eines Windschattengebietes herangezogen. In dem Falle sind die beiden Parameter Fahrtwind-Widerstandes des Fahrzeuges und aerodynamische Axialkräfte der Windturbine (Fahrtwindwiderstandsanteil Windturbine) voneinander stark abhängig (siehe Fig. 17). Dadurch lässt sich der Fahrtwind-Widerstand unter Wahrung eines konstanten Bewegungswiderstandes des Fahrzeuges nicht mehr unabhängig vom Cw-Wert signifikant absenken.

Insbesondere bei kleinem Cw-Wert, stellt sich ein "Teufelskreis" bei Verwendung von Turbinensystemen ohne erfindungsgemäßem Windschild ein, sodass die oben genannte Anforderung nicht mehr erfüllt werden kann. Der Fahrtwind-Widerstand bei kleinem Cw-Wert ist bereits klein und kann nur durch eine signifikante Reduktion der Windschatten-Luftstrom-Geschwindigkeit weiter reduziert werden (vgl. Fig. 17).

Ohne Verletzung der oben genannten Anforderung eines konstanten Bewegungswiderstandes lassen sich diese Randbedingungen mithilfe eines Turbinensystems ohne Windschild nicht einstellen, denn

- nur bei großer Windturbinenleistung lässt sich die Windschatten-Luftstrom-Geschwindigkeit signifikant reduzieren. Dies führt aber gleichzeitig zu einer signifikanten Zunahme der aerodynamischen Axialkräfte der Windturbine (Fahrtwindwiderstandsanteil der Windturbine).

- die Windwiderstands-Ersparnis ist bei kleinem Cw-Wert zu gering, als das diese die auftretenden aerodynamischen Axialkräfte der Windturbine (Fahrtwindwiderstandsanteil der Windturbine) kompensieren könnten (siehe Fig. 17)

Damit bei kleinem Cw-Wert noch ein gewisser Kompensationsbeitrag durch einen eingesparten Fahrtwind-Widerstand geleistet werden kann, müsste die Windturbine mit maximaler Leistung laufen, was aber zu einer signifikanten Zunahme des Bewegungswiderstands des Fahrzeugs aufgrund der hohen aerodynamischen Axialkräfte der Windturbine führen würde.

Ein Turbinensystem ohne Windschild kann die oben genannte Anforderung nur erreichen, wenn die Windturbine eine minimale Leistung abgibt. In dem Falle ist die aerodynamische Axialkraft der Windturbine bei optimaler Blattstellung ebenfalls minimal und führt zu keiner signifikanten Zunahme des Bewegungswiderstands des Fahrzeuges. Die Erzeugung eines Windschatten-Luftstroms mit niedriger Geschwindigkeit lässt sich mit einem Turbinensystem ohne Windschild unter diesen Bedingungen nicht mehr erreichen.

In einer bevorzugten Ausführungsform der Erfindung ist die Turbine dadurch gekennzeichnet, dass die Turbine einen Durchmesser zwischen 32% und 120%, bevorzugt zwischen 80 und 100% der Breite der frontalen Projektionsfläche des Fahrzeuges aufweist. Unter dem Durchmesser der Turbine wird im Sinne der Erfindung bevorzugt die Kreisfläche verstanden, welche die Turbine während der Rotation aufspannt. Im Falle einer Windturbine entspricht der Durchmesser der Turbine beispielsweise bevorzugt der doppelten Länge des Abstandes der Spitze eines Rotorblattes zur zentralen Rotationsachse der Windturbine. Die Breite der Fahrzeugfront entspricht im Sinne der Erfindung bevorzugt der Ausdehnung der frontalen Projektion des Fahrzeuges quer zur Fortbewegungsrichtung des Fahrzeuges. Unter der Höhe der Fahrzeugfront wird entsprechend senkrecht zur Breite bevorzugt die Ausdehnung entlang der durch die Schwerkraft gekennzeichneten Achse von oben nach unten verstanden. Für ein Fahrzeug wie beispielsweise ein LKW mit einer Breite der Fahrzeugfront (einschließlich der Außenspiegel) von 3 m und einer Höhe von 4,5 m, ist der Durchmesser der Windturbine in der bevorzugten Ausführungsform bevorzugt zwischen 1 m und 3,6 m und besonders bevorzugt zwischen 2,4 m und 3 m aufweist. Durch die bevorzugten Abmaße der Windturbine kann eine besonders effektive Reduktion des Staudruckes und eine große Windturbinenleistung erreicht werden. Das Windschild umrandet im Querschnitt bevorzugt die Turbine, sodass der Innendurchmesser des Windschildes an der axialen Position der Rotorblattvorderkante bevorzugt zwischen 0,1 cm und 30 cm größer ist als der Außendurchmesser der Turbine.

In einer bevorzugten Ausführungsform der Erfindung ist die Turbine und das Windschild so ausgeführt, dass beide Bauteile zusammen eine Querschnittsfläche zwischen 60% und 140%, bevorzugt 80% bis 110% der frontalen Projektionsfläche des Fahrzeuges aufweisen. Das Windschild gewährleistet eine ganzheitliche Fahrtwindabschirmung verschiedener Fahrzeugformen. Während das Windschild bevorzugt ein ringförmiges Gehäuse ist, kann es durch die Formgebung auch an die Fahrzeugfront angepasst werden. Mit einem Windschild der vorgenannten Dimensionen wird auf besonders effektive Weise ein Teil des energiereichen Fahrtwindes am Fahrzeug vorbeigelenkt (Energie-Luftstrom) während der andere energiereiche Anteil durch die Turbine strömt und das Volumen auf der Leeseite (Rückseite) des Windschildes auffüllt (Windschatten-Luftstrom). Die Geschwindigkeitsreduktion des Windschatten-Luftstromes wird neben der Umwandlung von kinetischer in nutzbare Energie beim Passieren der Turbine zu einem erheblichen Teil durch das Aufweiten des Windschatten-Luftstroms auf der Rückseite des Windschilds erreicht.

Gemäß der Erfindung ist das Windschild so ausgeführt, dass das Windschild ein ringförmiges Gehäuse ist, welches die Turbine umrandet und eine Außenkontur aufweist, deren Abstand zur Drehachse zu der dem Fahrzeug zu gewandten Seite anwächst. Im Sinne der Erfindung meint ein ringförmiges Gehäuse bevorzugt, dass das Windschild in der frontalen Ansicht eine einem Ring ähnliche Form aufweist, mit einem Innendurchmesser und einer nicht notwendigerweise kreisförmigen Außenkontur, wobei der Innendurchmesser des Windschildes größer ist als der Außendurchmesser der Turbine, sodass das ringförmige Windschild die Turbine im Querschnitt umrandet. Im Falle einer Windturbine ist somit der Innendurchmesser des Windschildes an der axialen Position der Rotorblattvorderkante größer als die Länge der Rotorblätter. Die im Umfang variierende Ringbreite des ringförmigen Windschildes entspricht bevorzugt der Differenz aus minimalem Innendurchmesser und der maximal von der Windturbinenachse entfernten Außenkonturkante an der jeweiligen Umfangsposition. Es ist bevorzugt, dass die Innenseite des Windschildes an der vorderen Seite kreisförmig ist, weiter stromab (zum Fahrzeug hin)jedoch in eine nicht-kreisförmige Innenkontur übergeht, deren Abstand sich ebenfalls zur Windturbinenachse zu der dem Fahrzeug zugewandten Seite vergrößert.

Das Anwachsen der Innen- und/oder Außenkontur des Windschildes meint bevorzugt ein Ansteigen des radialen Abstandes zur Drehachse der Turbine (Windturbinenachse) entlang der Fahrtrichtung. In der Queransicht ist die Außenkontur des Windschildes somit durch einen radialen Anstieg der Außenkontur an der jeweiligen Umfangsposition von einem vorderen, minimalen Abstand zu einem hinteren (dem Fahrzeug zugewandten) maximalen Abstand bezogen auf die Windturbinenachse gekennzeichnet. Gleiches gilt im Falle einer Windturbine bevorzugt für die Innenkontur bevorzugt ab der axialen Position, welche sich stromab von der Rotorblattvorderkante befinden. Der Anstieg erfolgt bevorzugt stetig monoton und kann abschnittsweise linear erfolgen. Der radiale Anstieg der Innen- und/oder Außenkontur kennzeichnet einen Steigungswinkel vom vorderen zum hinteren Ende des Windschildes an der jeweiligen Umfangsposition, welchen der durch Aufweiten des Windschatten-Luftstroms bzw. auf die Fahrzeugfront einströmenden Energie-Luftstrom erfährt. Der Verlauf der Innenkontur entlang der axialen Fahrtrichtung an jeder Umfangsposition ist bevorzugt derart geformt, dass diese möglichst der natürlichen Stromröhrenberandung von einer betriebenen Windturbine im Freifeld ähnelt. Die Stromröhre meint in diesem Fall (unter stationären Randbedingungen) eine gedachte Röhre mit einer Querschnittfläche an jeder axialen Position, durch die immer diejenigen Luftteilchen strömen, welche auch die Windturbine durchströmen werden (Stromröhre stromauf von der Windturbine) bzw. durchströmt haben (Stromröhre stromab von der Windturbine). Hierdurch wird sowohl der Windschatten-Luftstrom als auch der Energie-Luftstrom besonders verlustfrei aufgeweitet bzw. abgelenkt. Das Einleiten der Windschildkräfte in die Windturbinenhalterung sollte bevorzugt mit aerodynamischen Profilstreben erfolgen, welche gleichzeitig zur Drallreduktion verwendet werden können, um eine wirbelarme Führung der Luftströme entlang des Fahrzeuges zu gewährleisten.

Gemäß der Erfindung ist das Anwachsen der Außenkontur des Windschildes durch einen Steigungswinkel von 5° bis 35° gekennzeichnet ist. Der Steigungswinkel entspricht dem Winkel des radialen Anstieges der Außenkontur des Windschildes entlang der axialen Fahrtrichtung an der jeweiligen Umfangsposition. Der Steigungswinkel berechnet sich somit bevorzugt aus der Differenz beider Abstände von dem hinteren, maximalen bzw. vorderen, minimalen Abstand der Außenkonturkante zur Windturbinenachse bezogen auf die axiale Ausdehnung des Windschildes, d.h. der Ausdehnung entlang der Fahrtrichtung. Der bevorzugte Steigungswinkel hat sich als überraschend aerodynamisch erwiesen und führt zu einem besonders effektiven Windschatteneffekt. Der Steigungswinkel kann bevorzugt an der Windschild-Hinterkante und an der jeweiligen Umfangsposition zu einem entsprechenden Abströmwinkel für den Energie-Luftstrom führen, welcher diesen soweit von der Fahrzeugoberfläche nach allen Seiten abgelenkt, dass sich ein ringförmiger Durchströmkorridor für den Windschatten-Luftstrom mit einer bevorzugt mindestens 1,2-fachen Windturbinen-Projektionsfläche an der axialen Position mit der größten Querschnittausdehnung vom Durchströmkorridor und dem Fahrzeug einstellt.

Gemäß der Erfindung st die Außenkontur des Windschildes in der frontalen Projektion nicht kreisförmig, sondern an die Form der frontalen Projektionsfläche der Fahrzeugfront angepasst und bildet bevorzugt ein abgerundetes Rechteck. Die Außenkontur in der frontalen Projektion entspricht bevorzugt der maximalen Außenkontur des Windschildes auf der dem Fahrzeug zugewandten Seite. In der bevorzugten Ausführungsform wird die Außenkontur an die Form der abzuschirmenden Fahrzeugfront angepasst. Bevorzugt bezeichnet das Anpassen ein nahezu kongruentes Abbild der Fahrzeugfront, wobei durchaus ein Glätten der Außenkontur aerodynamisch günstig sein kann. Beispielsweise weisen viele LKWs eine nahezu rechteckige Fahrzeugfront auf, welche durch z.B. überstehende Seitenspiegel oder Antennen durchbrochen wird. In dem Falle ist es besonders bevorzugt als Außenkontur ein abgerundetes Rechteck zu wählen, um eine möglichst große Abschirmung der Fahrzeugfront zu erreichen. Erfindungsgemäß wurde erkannt, dass eine besonders strömungsgünstige Ausführungsform des Windschildes gerade durch ein nicht notwendigerweise kreisförmige Außenkontur erreicht wird. Stattdessen erfolgt eine Anpassung an die Fahrzeugfront, bevorzugt mit Hilfe eines abgerundeten Rechteckes. Die Abrundung des Rechteckes erfolgt an den Ecken, um Strömungsspitzen und Verwirbelungen zu minimieren.

Durch diese Ausführungsform kann eine besonders hohe Abdeckung der Fahrzeugfront von bevorzugt mehr als 90% erreicht werden. Hierdurch wird eine energetisch besonders günstige Fahrtwindabschirmung erzielt. Die Ausführungsform ist somit durch ausgezeichnete Ergebnisse hinsichtlich der Treibstoffeinsparung gekennzeichnet.

Die Dimensionierungen des Windschildes wird bevorzugt an die Fahrzeugfront angepasst. Für einen LKW kann beispielsweise eine Differenz der hinteren, maximalen Außenkonturkante zur vorderen, minimalen Außenkonturkante an der jeweiligen Umfangsposition zwischen 10 bis 50 cm bevorzugt sein, während die axiale Ausdehnung zwischen 30 cm und 130 cm beträgt. Die bevorzugte Dimensionierung erlaubt eine besonders verlustfreie Aufweitung der einströmenden Luft.

In einer bevorzugten Ausführungsform der Erfindung ist die Turbine eine Windturbine. Im Sinne der Erfindung umfasst die Windturbine einen Rotor, bevorzugt umfassend ein oder mehrere Rotorblätter, welche durch den Fahrtwind in Rotation versetzt werden. Zum einen kann die Rotationsenergie als nutzbare Energie mechanisch an den Motor des Fahrzeuges weitergeleitet werden. Zum anderen kann die Rotationsenergie mit Hilfe eines Generators zur Bereitstellung von elektrischem Strom dienen. Darüber hinaus erlaubt eine Windturbine, insbesondere in Verbindung mit dem Windschild, eine Reduktion des Windschatten-Luftstromes, welcher auf die Fahrzeugfront einströmt.

In einer bevorzugten Ausführungsform der Erfindung ist die Windturbine dadurch gekennzeichnet, diese 1 bis 7 bevorzugt 2 bis 4 und besonders bevorzugt 3 Rotorblätter aufweist. Bevorzugt umfasst die Windturbine in dieser bevorzugten Ausführungsform eine Nabe, an welche die Rotorblätter radial auslaufend bevorzugt mit einem Schlaggelenk befestigt vorliegen. Dies erlaubt es das Übertragen von Biegemomenten auf die Welle aufgrund ungleicher Kräfte an den einzelnen Rotoren zu vermeiden. Durch den Luftstrom werden die Rotorblätter in eine Rotation versetzt, wodurch der Luftströmung Energie entzogen wird und der Staudruck vor der Fahrzeugfront reduziert werden kann. Dem Fachmann sind eine Reihe verschiedener Formen von Rotorblättern bekannt, welche bevorzugt zur Umwandlung der Energie des Luftstromes in nutzbare Energie beispielsweise in elektrischen Strom verwandt werden können. Aerodynamische Formen von Rotorblättern wie sie beispielsweise für Windkrafträder eingesetzt werden, sind bevorzugt ebenfalls für das erfindungsgemäße Turbinensystem zur Einsparung von Treibstoff geeignet. Für die bevorzugt genannte Anzahl der Rotorblätter kommt es zu einer besonders effektiven Reduktion des Staudruckes und zu einer verlangsamten Windschatten-Luftströmung. Weiterhin kann durch die bevorzugte Anzahl von Rotorblättern die Geräuschentwicklung sowie eine potentielle Sichtbeeinträchtigung besonders effektiv reduziert werden. Wenn die 3 Rotorblätter noch mit einem Deckband verbunden werden (zur Reduktion der Schaufelspitzenverluste), erhöht sich gegenüber einem 2-Blatt Rotor zusätzlich noch deren Verdrehsteifigkeit, wodurch ein erhöhte Stabilität und geringe Störanfälligkeit gewährleistet wird.

In einer besonders bevorzugten Ausführungsform der Erfindung ist das Turbinensystem dadurch gekennzeichnet, dass der Abstand zwischen der Windturbine und der Fahrzeugfront zwischen 10 - 200 %, bevorzugt zwischen 20% und 90% und besonders bevorzugt zwischen 30% und 80 % des Durchmessers der Windturbine beträgt. Der Abstand der Turbine von der Fahrzeugfront entspricht bevorzugt der Distanz zwischen dem in Fahrtrichtung hinteren Ende der Turbine und dem vorderen Ende der Fahrzeugfront. Durch den Abstand der Turbine von der Fahrzeugfront wird ebenfalls der Abstand des Windschildes festgelegt, welches bevorzugt die Turbine im Querschnitt umrandet.

Die bevorzugt genannten Abstände der Windturbine von der Fahrzeugfront führen zu einer besonders effektiven Reduktion des Staudruckes vor der Fahrzeugfront. Abstände der Windturbine, welche kleiner sind als 200 %, bevorzugt 90% und besonders bevorzugt 80% des Durchmessers der Windturbine erzeugen einen besonders ausgeprägten Windschatten. D.h. durch das Vorhandensein der Turbine insbesondere zusammen mit dem Windschild wird bei den bevorzugt genannten Abständen die Geschwindigkeit der Luftströmung direkt vor der Fahrzeugfront in besonders hohem Maße reduziert und somit der Staudruck auf das sich bewegende Fahrzeug vermindert. Bei einem Abstand der Turbine, welcher kleiner als 10% des Durchmessers der Turbine ist, kann es zu starken Turbulenzen zwischen der Turbine und der Fahrzeugfront kommen. Dadurch kann es bei kleineren Abständen zu einer vermindert gleichmäßigen Reduktion der Luftströmung kommen, sodass der erfindungsgemäße Effekt der Treibstoffeinsparung geringer ausfällt, als in den bevorzugt genannten Bereichen. Überraschenderweise kann durch die Verwendung einer Turbine insbesondere für die bevorzugt genannten Abstände von der Fahrzeugfront erreicht werden, dass der $c_w$-Wert des Fahrzeuges mit Turbinensystem im Vergleich zu einem Fahrzeugsystem ohne Turbinensystem annähernd gleich oder sogar reduziert ist. Im Sinne der Erfindung bezeichnet der $c_w$-Wert bevorzugt den Strömungswiderstandkoeffizienten. Der $c_w$-Wert ist ein dimensionsloser Parameter, welcher das Verhältnis aus der Widerstandskraft des Fahrzeuges gegen den Luftstrom zu dem Produkt aus dem Staudruck der anströmenden Luft und Referenzfläche der Fahrzeugfront entspricht. Im Sinne der Erfindung quantifiziert der $c_w$-Wert somit bevorzugt die Widerstandskraft, welche ein Fahrzeug aufbringen muss, um gegen einen Luftstrom sich zu bewegen. Bevorzugt stellt der $c_w$-Wert ein Maß für den Luftwiderstand des Systems aus Fahrzeug und Turbinensystem bzw. nur des Fahrzeug als Vergleichswert des bekannten Standes der Technik. Erfindungsgemäß wird durch die Turbine insbesondere in Kombination mit dem Windschild die Geschwindigkeit der Luftströmung, welche auf die Fahrzeugfront einwirkt und somit der Staudruck reduziert. Durch die verminderte Luftströmung und Reduktion des Staudruckes wird somit im Sinne der Erfindung der $c_w$-Wert des Gesamtsystems vorteilhafterweise reduziert. Überraschenderweise ist der $c_w$-Wert für ein Fahrzeug mit Turbinensystem im Vergleich zu einem Fahrzeug ohne Turbinensystem entweder annähernd gleich (für Fahrzeuge mit einem $c_w$-Wert von ungefähr 0,6) oder sogar reduziert (für Fahrzeuge mit einem $c_w$-Wert größer als ungefähr 0,6). Dies stellt einen überraschenden Effekt dar, welcher von einem Fachmann nicht erwartet werden konnte. Insbesondere kann dadurch in überraschender Weise die Energieeffizienz eines Fahrzeuges mit einem Turbinensystem erhöht werden. Durch die Windturbine wird der auf die Fahrzeugfront einströmenden Luft Energie entzogen, welche in nutzbare Energie umgewandelt wird. Die nutzbare Energie kann bspw. durch eine mechanische Ankopplung der Windturbine an den Motor oder durch Erzeugung von elektrischem Strom bereitgestellt werden. Da erfindungsgemäß erkannt wurde, dass sich der Staudruck direkt vor dem Fahrzeug reduziert, ist der Gesamt $c_w$-Wert des Systems aus Fahrzeug und Windschild inklusive Windturbine vorteilhafterweise annähernd gleich, in vernachlässigbarer Weise erhöht oder sogar reduziert. Da durch das Vorhandensein des Turbine in Kombination mit dem Windschild somit kaum oder keine zusätzliche Energie für die Fortbewegung des Fahrzeuges gegen den Luftwiderstand benötigt wird, ist die Gesamtenergiebilanz aufgrund der bereitgestellten nutzbaren Energie durch das Turbinensystem positiv. Durch das erfindungsgemäße Turbinensystem, insbesondere in der bevorzugt genannten Ausführungsform kann somit eine besondere hohe Energieeffizienz erreicht und wirksam Treibstoff eingespart werden.

In einer bevorzugten Ausführungsform der Erfindung umfasst das Turbinensystem eine Drehmomentübertragungseinheit, mit welcher das Drehmoment der Windturbine an eine Drehwelle des Motors des Fahrzeuges mechanisch koppelbar ist. Während die Windturbine durch den Fahrtwind zur Rotation angetrieben wird, kann durch die mechanische Kopplung mittelbar eine Rotationsenergie auf die Antriebswelle des Fahrzeuges überführt werden. Dadurch wird der Motor entlastet und Treibstoff zum Antrieb des Motors und zur Bewegung des Fahrzeuges kann eingespart werden. Es war völlig überraschend, dass durch diese bevorzugte Ausführungsform eine besonders hohe Treibstoffeinsparung erzielt werden kann. So kommt es bei der Übertragung der mechanischen Energie von der Windturbine auf den Motor überraschenderweise zu nur sehr geringen Energieverlusten. Die bevorzugte Variante ist somit durch einen besonders hohen Wirkungskoeffizient gekennzeichnet und lässt sich darüber hinaus in überraschend einfacher Weise ausführen.

In einer bevorzugten Ausführungsform der Erfindung erfolgt die mechanische Kopplung der Windturbine mit dem Motor des Fahrzeuges durch die Drehmomentübertragungseinheit mit Hilfe einer Fliehkraftkupplung mit integriertem Freilauf. Vorteilhafterweise wird dadurch, eine motorseitige Drehzahlerhöhung, wie sie beispielsweise beim Beschleunigen des Fahrzeuges erfolgt, nicht auf die Windturbine übertragen. Stattdessen wird durch die bevorzugte Ausführungsform sichergestellt, dass eine mechanische Energie ausschließlich von der rotierenden Windturbine auf den Motor nur bei genügend großer Drehzahl und nicht in entgegengesetzter Richtung übertragen wird. Dem Fachmann sind diesbezüglich aber auch weitere Ausführungsformen bekannt, um eine mechanische Kopplung der Windturbine mit dem Motor des Fahrzeuges zu erreichen, welche zu einer besonders effektiven Treibstoffeinsparung führt.

In einer bevorzugten Ausführungsform der Erfindung umfasst das Turbinensystem einen Generator, wobei die Turbine den Generator zur Erzeugung von elektrischem Strom antreibt. Im Sinne der Erfindung bezeichnet ein Generator bevorzugt eine Vorrichtung, welche aus der durch die Turbine bereitgestellten mechanischen Energie, bevorzugt als Rotationsenergie, elektrischen Strom erzeugen kann. Dem Fachmann ist das Funktionsprinzip von Generatoren bekannt, so dass ein Fachmann in der Lage ist einen geeigneten Generator für die bevorzugt genannte Verwendung auszuwählen. Beispielsweise können als Generatoren PermanentMagnet 3-Phasen A.C. (z.B. in der Ausführung mit 420V oder 230V Ausgangsspannung und einer Ausgangsleistung von 25kW - 55kW) für die Positionierung im Nabenbereich geeignet sein. Diese Generatoren erlauben eine besonders effiziente Umwandlung der durch die Turbine bereitgestellten Rotationsenergie in elektrischen Strom und weisen somit einen erhöhten Wirkungsgrad auf. Ein Ringgenerator könnte ebenfalls in Frage kommen, wenn dieser in der Turbinenhalterung integriert ist und die Rotorblätter-Flügelspitzen dementsprechend angepasst wurden.

Durch die Verwendung von Generatoren wandelt die Turbine die Fahrtwindenergie bevorzugt nicht in Rotationsenergie zum direkten Antrieb eines mechanisch gekoppelten Motors um, sondern dient zur Erzeugung von elektrischem Strom. Der dadurch erzeugte Strom stellt im Sinne der Erfindung eine nutzbare Energie dar, welche auf verschiedene Art und Weise zur Einsparung von Treibstoff verwendet werden kann. Dabei kann es bevorzugt sein, dass die elektrische Energie in einer Batterie gespeichert wird.

In einer bevorzugten Ausführungsform der Erfindung umfasst das Fahrzeug einen Elektromotor und/oder einen Hybridmotor und der durch den Generator erzeugte elektrische Strom wird für den Antrieb des Elektromotors und/oder des Hybridmotors bereitgestellt. Im Sinne der Erfindung ist ein Elektromotor bevorzugt eine Vorrichtung, welche für den Fachmann auf bekannte Weise elektrische Energie in mechanische Energie umwandelt und dadurch das Fahrzeug fortbewegt. Unter einem Hybridmotor wird im Sinne der Erfindung bevorzugt ein Motor verstanden, welcher neben einem Elektromotor einen Verbrennungsmotor, wie beispielsweise einen Ottomotor, einen Dieselmotor oder einen Gasmotor umfasst. In dieser Ausführungsform wird somit entweder durch einen Elektromotor oder aber durch einen Hybridmotor direkt elektrische Energie genutzt, um das Fahrzeug anzutreiben. Vorteilhafterweise wird durch die Turbine elektrischer Strom bereitgestellt, welcher den Elektromotor oder aber den Hybridmotor entlastet. In dieser bevorzugten Ausführungsform wird von dem Turbinensystem somit nutzbare Energie in Form von elektrischem Strom bereitgestellt, welcher direkt zu einer Treibstoffeinsparung für die Fortbewegung des Fahrzeuges führt.

In einer bevorzugten Ausführungsform der Erfindung umfasst das Fahrzeug elektrische Geräte bevorzugt ausgewählt aus einer Gruppe umfassend Klimaanlage, Musikanlage, Kühlaggregat, Bordcomputer, Beleuchtungsmittel, Navigationsgerät, TV-Gerät und/oder Fahrerassistenzsystem und der elektrische Strom wird für den Betrieb einem oder mehreren elektrischen Geräten bereitgestellt. Vorteilhafterweise wird in dieser bevorzugten Ausführungsform von der erfindungsgemäßen Turbine nutzbare Energie für den Betrieb eines oder mehrere elektrischer Geräte des Fahrzeuges bereitgestellt. Dadurch kann im Sinne der Erfindung eine mittelbare Treibstoffeinsparung erzielt werden. So ist es im Stand der Technik üblich, dass die elektrischen Geräte der Fahrzeuge mit Hilfe eines Generators angetrieben werden. Im Falle eines Fahrzeuges mit Verbrennungsmotor wird ein solcher Generator bevorzugt auch als Lichtmaschine bezeichnet. Durch die Bereitstellung von elektrischem Strom durch die erfindungsgemäße Turbine kann somit mittelbar der Motor, welcher den Generator antreibt, entlastet werden. Somit kann auch für ein Fahrzeug mit einem Verbrennungsmotor unter Verwendung eines Generators die erfindungsgemäße Turbine zu einer Einsparung des Treibstoffes führen. Es kann im Sinne der Erfindung dabei ebenfalls bevorzugt sein, dass nicht der Treibstoff für den Antrieb des Motors des Fahrzeuges eingespart wird, sondern beispielsweise der Treibstoff zum Betrieb eines der elektrischen Geräte, bspw. eines Kühlaggregates umfassend einen Dieselmotor. Auch in diesem Fall wird durch die Verwendung des Turbinensystems die Energiebilanz des gesamten Systems umfassend Fahrzeug, elektrische Geräte sowie das Turbinensystem vorteilhafterweise erhöht.

In einer bevorzugten Ausführungsform der Erfindung ist die Turbine eine Gasturbine bevorzugt ein Aero-Derivativ zur Erzeugung von elektrischem Strom. Ein Aero-Derivativ wie z.B. das RB211 von Siemens (aeroderivative gas turbine industrial RB211) stellt die Bauart einer Gasturbine dar, welche besonders bevorzugt für das Turbinensystem ist. Der Fachmann erkennt, dass auch anderen Aero-Derivate ähnlicher Bauweisen bevorzugt geeignet sein können. Die industrielle Gasturbine RB211 unterscheidet sich von dem eigentlichen Flugzeugtriebwerk RB211 (Rolls-Royce plc) u.a. durch zusätzlich eingebaute Turbinenstufen, welche möglichst die gesamte kinetische Energie im Luftstrom in mechanische bzw. elektrische Energie umwandeln sollen. Die elektrische Ausgangsleistung (Dauerbetrieb) liegt bei ca. 32 MW. Für den Einsatz der industriellen Gasturbine RB211 als Turbine müsste diese bevorzugt u.a. noch mit einer aerodynamisch optimierten Verkleidung, ähnlich wie bei Flugzeugtriebwerken, versehen werden. Zudem müsste es mit einem z.B. Frisch- und Kühlluftsystem ausgestattet werden, mit dem die mit heißem Abgas beaufschlagte Zugoberfläche gekühlt und die Zugabteile belüftet werden können. Der besondere Vorteil von Aero-Derivativen liegt in Ihrer Kompakt- und Leichtbauweise, ihres sehr hohen thermischen Wirkungsgrades (meist über 40%) und in ihrer sehr schnellen Austauschbarkeit (weniger als 24h). Der mobile Einsatz eines Aero-Derivativs zur Stromerzeugung stromauf von insbesondere einem Hochgeschwindigkeitszug bei Reisegeschwindigkeiten von 200km/h bis ca. 1000km/h hat dabei mehrere Vorteile:

1. Bei hohen Reisegeschwindigkeiten entfällt die Ansaugarbeit der Luftmassen für das Aero-Derivativ, sodass weniger Verdichtungsarbeit geleistet werden muss, um den gleichen Brennkammereintrittsdruck zu erzeugen im Vergleich zu einer unbewegten Gasturbine. Insgesamt gesehen erhöht sich dadurch der thermische Wirkungsrad des Aero-Derivativs.

2. Das stromauf von dem Hochgeschwindigkeitszug positionierte Aero-Derivativ erzeugt darüber hinaus eine signifikante Reduktion des aerodynamischen Widerstandes, denn es kann sich nur ein vermindertes oder kein Staudruckgebiet im Bereich der Luftansaugung ausbilden. Die RB211 weist bspw. einen Eintrittsdurchmesser von ca. 2,1 m auf.

3. Das Abgas des Aero-Derivativs, welches mit ca. 20m/s - 30m/s austritt, lässt sich einerseits entlang der Zugoberfläche strömen bzw. auch leiten, um auftretende Reibungsverluste durch eine Art Luftpuffer zwischen der ruhenden Luft (Umgebung) und dem sich schnell bewegenden Zug zu reduzieren. Insbesondere im Heckbereich des Zuges (Zugende) ist ein gezieltes Ausblasen des Abgases vorteilhaft, weil dadurch die Sogwirkung und somit der aerodynamische Fahrwiderstand besonders bei hohen Reisegeschwindigkeiten reduziert wird. Falls der Abgasdruck für eine Mindest-Ausblasgeschwindigkeit aufgrund z.B. von Reibung innerhalb der Rohrleitung nicht ausreichen sollte, könnte auch teilentspanntes Abgas (höherer Druck) aus einer Turbinenstufe abgezapft werden.

Bei typischen Reisegeschwindigkeiten von Hochgeschwindigkeitszügen (größer als 250km/h) macht der aerodynamische Widerstand 75% vom Gesamtfahrwiderstand aus. Von diesem aerodynamischen Widerstand entfallen wiederum 50% auf den Reibungswiderstand und 50% auf den Druckwiderstand.

In einer bevorzugten Ausführungsform der Erfindung ist das Fahrzeug ein Lastkraftwagen, ein Personenkraftwagen, ein Flugobjekt und/oder ein Zug. Vorteilhafterweise kann das erfindungsgemäße Turbinensystem für eine Treibstoffeinsparung einer Vielzahl von Fahrzeugen angewandt werden. Die bevorzugt genannten Fahrzeuge sind besonders geeignet, da es bei diesem im Stand der Technik aufgrund der Fahrtgeschwindigkeiten zu einem erhöhten Luftwiderstand kommt. Daher kann es für die genannten Fahrzeuge mit handelsüblichen Fahrzeugfronten zu einer besonders hohen Reduktion des Staudruckes durch die Turbine kommen. Weiterhin kann unter betriebsüblicher Verwendung der genannten Fahrzeuge ein besonders hoher Anteil von nutzbarer Energie aus dem Fahrtwind gewonnen werden, so dass das Turbinensystem für diese Fahrzeuge zu einer besonders effektiven Treibstoffeinsparung führt. In einer besonders bevorzugten Ausführungsform der Erfindung ist der Lastkraftwagen (LKW) ein CBE (engl. *cab behind engine truck*), welcher im deutschsprachigen Raum auch bevorzugt als Langhauber-LKW bezeichnet wird. CBE LKWs werden insbesondere im USamerikanischen Raum oder auch in Australien eingesetzt. Bei der Verwendung von CBE LKWs, deren Fahrzeugfront durch einen vor dem Führerhaus vorgelagertem Motorraum gekennzeichnet ist, führt das erfindungsgemäße Turbinensystem zu einer überraschend effektiven Reduktion des Luftstromes und somit zur Einsparung von Treibstoff. Darüber hinaus sind weitere besonders bevorzugte LKWs im Sinne der Erfindung COEs (engl. *cab over engine truck*). Bei diesen Modellen befindet sich der Motor unterhalb des Führerhauses, wodurch eine flache Fahrzeugfront erreicht und die Gesamtlänge des Fahrzeuges reduziert wird. COE LKWs werden insbesondere in Europa sowie im asiatischen Raum, beispielsweise in Japan oder China eingesetzt. Da die Treibstoffeinsparung sowohl bei CBEs als auch bei COE LKWs durch die Verwendung des Turbinensystems besonders hoch ist und diese LKW-Typen global weitverbreitet genutzt werden, kommt dieser bevorzugten Ausführungsform eine besonders hohe kommerzielle Relevanz zu.

In einer bevorzugten Ausführungsform der Erfindung umfasst ist das Turbinensystem dadurch gekennzeichnet, das Windschild am oberen Ende mit Hilfe eines Gestänges an einem an dem Fahrzeuggehäuse befestigten Überrollbügel angebracht vorliegt und das Windschild am unteren Ende mit Hilfe einer Trägerplatte am Fahrgestell des Fahrzeuges befestigt ist. Die bevorzugte Turbinenhalterung eignet sich insbesondere für die Anbringung der Windturbine an einem LKW, kann jedoch beispielsweise auch für Vans oder PKWs bevorzugt zum Einsatz kommen. Das Windschild ist bevorzugt an die Dimensionierung der Windturbine angepasst und umschließt bevorzugt als Gehäuse die Rotorblätter der Windturbine, Das Windschild wird daher bevorzugt auch als Gondel, Windturbinen-Ringgehäuse oder ringförmiges Gehäuse bezeichnet. Das Windschild kann bevorzugt über Streben an der Nabe der Windturbine befestigt sein, sodass die Rotorblätter drehbar in dem Windschild gelagert vorliegen. Das obere und untere Ende des Windschildes wird bevorzugt entlang der durch die Schwerkraft gekennzeichneten Achse definiert. Vom oberen Ende des Windschildes erstreckt sich bevorzugt ein Gestänge, welches beispielsweise als aerodynamische Profilstreben ausgestaltet sein kann, zu einem Überrollbügel. Es ist besonders bevorzugt, dass das Gestänge zwei Streben umfasst, welche jeweils seitlich am maximalen Umfang des Windschildes fixiert sind. Der Überrollbügel ist bevorzugt am Fahrgestell befestigt. Im Falle eines LKWs ist der Überrollbügel bevorzugt ein Gestänge, welches hinter dem Führerhaus vertikal angebracht vorliegt und dadurch den Überrollbügel bildet. Eine derartige obere Befestigung des Windschildes hat sich als besonders stabil erwiesen. Insbesondere erlaubt die inhärente Flexibilität der Lagerung des Windschildes an dem Gestänge und Überrollbügel einen Ausgleich der Fahrzeugvibrationen und vermeidet somit das Auftreten von Brüchen. Ganz besonders bevorzugt ist weiterhin, dass das Windschild an einem unteren Ende mit Hilfe einer Trägerplatte am Fahrgestell des Fahrzeuges befestigt wird. Dies unterstützt die Lagerung der Windturbine zusätzlich, wobei es bevorzugt sein kann ein Feder-Dämpfer-System zwischen der Trägerplatte und dem Fahrgestell zwischenzuschalten. Auch dieses vermag auftretende Fahrzeugvibrationen zu dämpfen. Bevorzugt besteht das Windschild aus harten, leichten Materialien wie beispielsweise Verbundswerkstoffen. Hierdurch kann das Gewicht der Turbinenhalterung reduziert werden ohne die Stabilität zu komprimieren. Weiterhin ist es bevorzugt, dass der Außendurchmesser des Windschildes zu der dem Fahrzeug zugewandten Seite anwächst. Dadurch kann der auftreffende Fahrtwind nahezu verlustfrei abgelenkt werden, wodurch ein besonders vorteilhaftes aerodynamisches Verhalten des Windschildes während der Fahrt gewährleistet wird. Zudem führt dies zu einer Aufweitung des Strömungsgebietes vor der Fahrzeugfront, wodurch es zu einer zusätzlichen Reduktion des Staudruckes durch die Windturbine kommt. Bei dieser besonders bevorzugten Turbinenhalterung ist somit neben einer besonders stabilen Halterung eine besonders ausgeprägte Treibstoffeinsparung möglich.

Es ist somit besonders bevorzugt, dass das Windschild an der Fahrzeugfront und/oder an der Nabe der Turbine angebracht wird, um eine stabile Fixierung zu ermöglichen.

In einer weiteren Ausführungsform der Erfindung kann ein Turbinensystem umfassend Rotorblätter auch dadurch gekennzeichnet sein, dass das Windschild an den äußeren Enden der Rotorblätter angebracht ist, sodass das Windschild mit den Rotorblätter rotiert. In dieser Ausführungsform ist das Windschild somit nicht an der Fahrzeugfront und/oder beispielsweise der Nabe der Turbine ortsfest fixiert, sondern dreht sich mit den Rotorblättern. Diese Anwendung kann besonders dann vorteilhaft sein, wenn das Windschild gleich einem Deckband die Rotorblätterspitzen stabilisieren soll.

## Detaillierte Beschreibung

In Sinne der Erfindung kann es bevorzugt sein, dass das Turbinensystem oder bevorzugte Ausführungsformen davon und/oder die Verwendung des Turbinensystems oder bevorzugte Ausführungsformen davon zur Einsparung von Treibstoff bei einem Fahrzeug auch als TU*WING* (TuWing) Technologie bezeichnet. Bei Beispielen von Fahrzeugen welche mit einer TU*WING* (TuWing) Technologie ausgestattet sind, handelt es sich daher bevorzugt um Fahrzeuge mit angebrachtem Turbinensystem gemäß der Erfindung oder bevorzugte Ausführungsformen davon. Unter dem Begriff "Standard" hingegen werden bevorzugt solche Fahrzeuge bezeichnet, welche nicht mit der TU*WING* (TuWing) Technologie ausgestattet sind und demzufolge keine angebrachten Turbinensysteme gemäß der Erfindung oder bevorzugten Ausführungsformen davon aufweisen.

Im Folgenden soll die Erfindung an Hand von Beispielen näher erläutert werden, ohne auf diese beschränkt zu sein.

Kurzbeschreibung der Abbildungen

Fig. 1 Schematische Darstellung einer bevorzugten Ausführungsform der Erfindung, welche die Verwendung des Turbinensystems an einem LKW zeigt

Fig. 2 Schematische Darstellung der Anwendung und Auswirkung der Verminderung des Staudruckes am Beispiel eines CBE LKWs mit und ohne Turbinensystem

Fig. 3 Schematische Darstellung eines Vergleichs der axial wirkenden Kräfte auf einen LKW mit und ohne ein Turbinensystem

Fig. 4 Schematische Darstellung bevorzugter Komponenten des Turbinensystem am Beispiel eines CBE LKWs

Fig. 5 Schematische Darstellung einer bevorzugten Windturbine mit Deckband für einen CBE LKW

Fig. 6 Schematische Darstellung bevorzugter Komponenten der Turbinen-Halterung

Fig. 7 Schematische Darstellung der bevorzugten mechanischen Kopplung der Windturbine an einen Motor eines CBE LKW

Fig. 8 Schematische Darstellung eines LKW-Modelles für die Durchführung des Tests im Windkanal

Fig. 9 Schematische Darstellung der Messkonfigurationen zur Durchführung des Tests im Windkanal

Fig. 10 Schematische Darstellung des Windkanals mit Messsektion

Fig. 11 Experimentelle Ergebnisse für die Bestimmung des $c_w$-Wertes des ModellLKWs mit und ohne einem Turbinensystem

Fig. 12 Experimentelle Ergebnisse für die normalisierte Windturbinenleistung in Abhängigkeit des Abstandes der Windturbine von der Fahrzeugfront

Fig. 13 Experimentelle Ergebnisse für den Einfluss des Windschattens der Windturbine auf einen COE-Standard LKW in Abhängigkeit des Abstandes der Windturbine von der Fahrzeugfront

Fig.14 Schematische Darstellung bevorzugter Komponenten des Turbinensystem zur Stromerzeugung am Beispiel eines CBE LKWs

Fig. 15 Schematische Illustration der Lenkung des Luftstromes durch Windschild und Windturbine für eine bevorzugte Ausführungsform des Turbinensystems am Bespiel eines CBE LKWs

Fig. 16 Schematische Illustration der Lenkung des Luftstromes durch Windschild und Gasturbine für eine bevorzugte Ausführungsform des Turbinensystems am Bespiel eines Zuges

Fig. 17 Experimentelle Ergebnisse für die Zusammensetzung des Fahrtwind-Widerstandes eines LKW mit und ohne Windturbine

Ausführliche Beschreibung bevorzugter Ausführungsformen der Erfindung

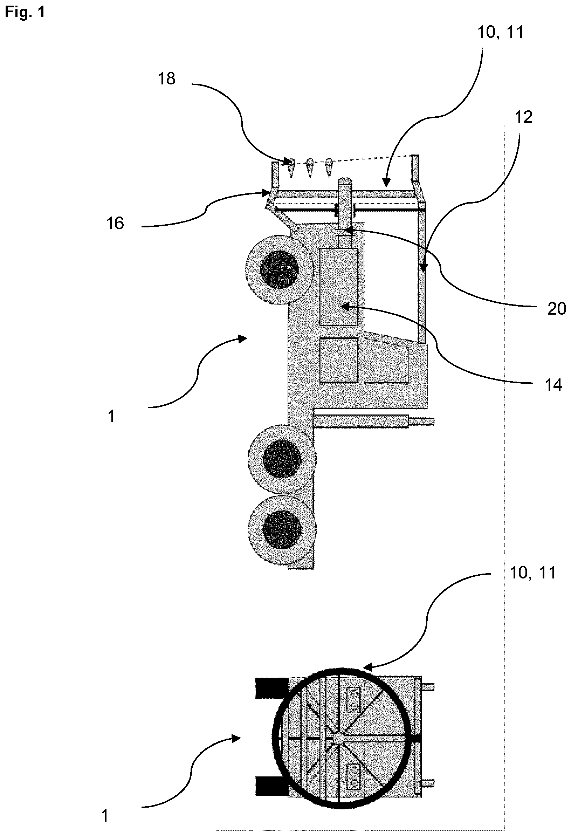

In Fig. 1 ist ein schematischer Aufbau eines CBE-LKW's mit angebauten Turbinensystem dargestellt, aus dem man erkennen kann, wie das 1. Prinzip z.B. technisch (sehr vereinfacht) bei Vorwärtsgeschwindigkeiten von 80km/h bis 140km/h umgesetzt werden kann. Ein CBE (engl. *cab behind engine truck*) ist bevorzugt ein Langhauber-LKW, bei dem sich der Motor vor dem Fahrerhaus befindet. Die Ausführungen zeigen wie durch ein Turbinensystem das o.g. 1. Prinzip bevorzugt umgesetzt werden kann, um einen Teil der im Fahrtwind enthaltenen kinetischen Energie in mechanische Energie umzuwandeln. Dabei ist es für den Fachmann ersichtlich wie diese technische Umsetzung auf andere Fahrzeuge übertragbar ist. Die Hauptkomponenten der Turbinensystems bestehen in diesem Beispiel aus einer Windturbine, deren Befestigungsgerüst, einer Kupplung und deren Verbindung zum LKW-Antriebsstrang.

Bei höheren Vorwärtsgeschwindigkeiten ab 140km/h bis 1000km/h (z.B. Hochgeschwindigkeitszüge) ist die Umwandlung der im Fahrtwind enthaltenen kinetischen Energie in mechanische Energie wesentlich komplexer und lässt sich z.B. nicht mehr durch ein einfaches Windrad realisieren. Um auch gleichzeitig das Prinzip 2 in dem genannten Geschwindigkeitsbereich erfüllen zu können, ließe sich mit den heutigen technischen Mitteln z.B. eine mobile Gasturbine zur direkten Stromerzeugung (Aero-Derivativ) einsetzen. Der Eintrittsdurchmesser der Gasturbine (im Bereich der Luftansaugung) müsste aber bevorzugt derart groß gewählt werden, dass wie im Beispiel des CBE LKWs mit angebauter Windturbine die Querschnittsfläche aus Windschild und Turbine damit mindestens 60%, bevorzugt mindestens 80% und besonders bevorzugt mindestens 90% der frontalen Projektionsfläche des Fahrzeuges abgedeckt werden. Gasturbinen in dieser Größenordnung erzeugen i.d.R. eine Leistung, welche über der benötigten Leistung von derzeitig verkehrenden Hochgeschwindigkeitszügen (z.B. 5MW-8MW) liegt und würden insbesondere dazu lohnen, die überschüssige Leistung in das allgemeine Stromnetz einzuspeisen.

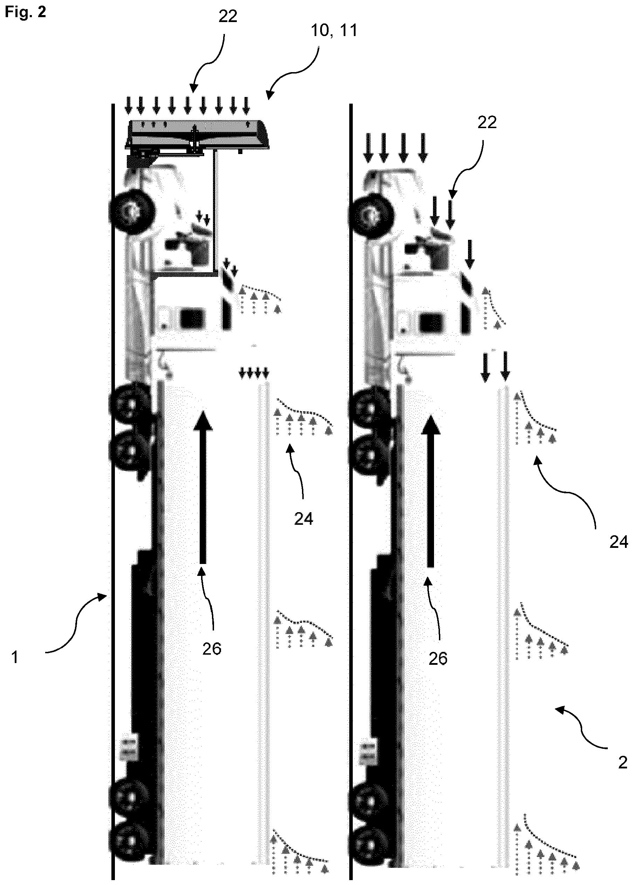

In Fig. 2 wird schematisch das o.g. Prinzip 2 zu den Auswirkungen auf den Strömungsdruck und auf den Grenzschichtverlauf am Beispiel eines CBE-LKW mit und ohne installiertem Turbinensystem gezeigt. Hierbei wird angenommen, dass sich der LKW mit 90km/h durch ruhende Luft (Windstille) bewegt. Die Fahrzeugfront trifft somit kontinuierlich auf eine ruhende Luftmasse, welche zunächst komprimiert wird und dann im weiteren Verlauf z.T. vom Fahrzeug mitgerissen wird. Im Fall des Standard LKWs trifft die ruhende Luftmasse auf die 90km/h schnelle Fahrzeugfront, was zu einer Aufstauung führt und im oberen Bild von Fig. 2 durch ausgefüllte Pfeile entgegen der Fahrzeugrichtung dargestellt ist. Im weiteren Verlauf, insbesondere entlang des Sattelaufliegers (ebenfalls 90km/h schnell) wird die Strömung unmittelbar an der Oberfläche mitgerissen, wodurch sich die mit gepunkteten Pfeilen dargestellten Strömungsgeschwindigkeiten einstellen (stark vergrößert illustriert). Im Fall des LKWs mit einem Turbinensystem trifft die ruhende Luftmasse zunächst auf die rotierenden Windturbinenschaufeln, wo es auch zu einer Aufstauung kommt, welche aber weitaus kleiner ist als beim Standard-LKW. Das liegt hauptsächlich daran, dass die ruhende Luftmasse die Windturbine durchströmen kann und nicht um diese herumströmen muss, wie bei der Fahrzeugfront. Beim Durchströmen der Windturbine wird die Luftmasse ebenfalls in Fahrtrichtung mitgerissen und erreicht weiter stromab Geschwindigkeiten, welche in der Größenordnung der Vorwärtsgeschwindigkeit liegen (ca. 50%-60% von 90km/h). Dadurch verringert sich signifikant der Aufstauungseffekt an der unmittelbaren Fahrzeugfront und auch die Strömung unmittelbar entlang des Aufliegers wird nun weniger stark mitgerissen und verursacht weniger Strömungsverluste, weil diese bereits im Vorfeld schon ein Teil Ihrer kinetischen Energie an die Windturbine abgegeben hatte. Im unteren Bild in Fig. 2 wird dieser Vorgang durch kleinere Strömungsgeschwindigkeiten (kürzere Pfeile) visualisiert (stark vergrößert illustriert). Die Auswirkung des Turbinensystems auf die Luftströmung ist am Beispiel eines CBE-LKW gezeigt, stellt sich jedoch bevorzugt analog für andere LKW oder Fahrzeuge unter Verwendungen des Turbinensystems ein. Die Änderung der Luftströmung und ein verringerter Aufstauungseffekt in Kombination mit der Fahrtwind-Energieumwandlung unter Verwendung des Turbinensystems tragen zu einer Reduzierung des Treibstoffes bei.

Vorwärtsgeschwindigkeiten ab 400km/h bis 1000km/h treten z.B. bei Hochgeschwindigkeitszügen auf. Bei diesen Vorwärtsgeschwindigkeiten ist der Einsatz eines Windrades als Windturbine, welches an den Motor mechanisch gekoppelt wird, wenig vorteilhaft und sollte bevorzugt z.B. durch eine axiale Gasturbine zur Stromerzeugung (Aero-Derivativ) ersetzt werden. Dadurch lässt sich der Staudruck stromauf von der z.B. erdgasbetriebenen Gasturbine signifikant absenken bzw. bei Erreichen, der für die Gasturbine optimalen Vorwärtsgeschwindigkeit gänzlich vermeiden. Die relativ langsam aber heiß ausströmende Luft am Gasturbinenaustritt wird bevorzugt an verschiedenen Positionen der Zugoberfläche ausgeblasen. Falls notwendig kann die heiße Luft auch über ein Rohrsystem in den hinteren Bereich des Zuges geleitet werden. Die einzelnen Zugabteile werden bevorzugt mit Luft versorgt, welche sich z.B. am Verdichter der Gasturbine abzapfen und über ein Rohrsystem an die entsprechenden Positionen zuführen ließe.

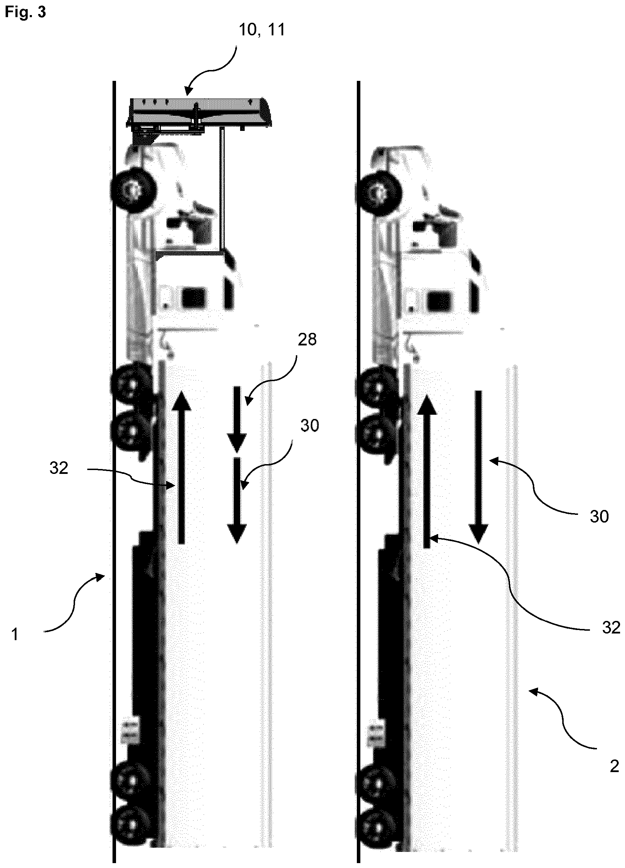

In Fig. 3 wird das o.g. 3. Prinzip der Erhaltung der axialen Kräfte am Beispiel eines CBE LKWs mit und ohne ein installiertes Turbinensystem visualisiert. Hierbei wird angenommen, dass der LKW sich mit 90km/h durch ruhende Luft (Windstille) auf ebener Straße bewegt. Beim Standard LKW entspricht dann die aufzubringende Motorkraft dem Fahrzeugwiderstand. Im Fall des LKWs mit Turbinensystem ist der Gesamtwiderstand gleich dem des Standard LKW, nur setzt sich dieser aus der verminderten Widerstandskraft und aus der zusätzlichen axialen Windturbinenkraft zusammen.

Am Beispiel eines Standard CBE LKWs soll eine besonders einfache, technische Umsetzung der vorgestellten Prinzipien zur Treibstoffeinsparung vorgestellt werden und im Folgenden näher erklärt werden.

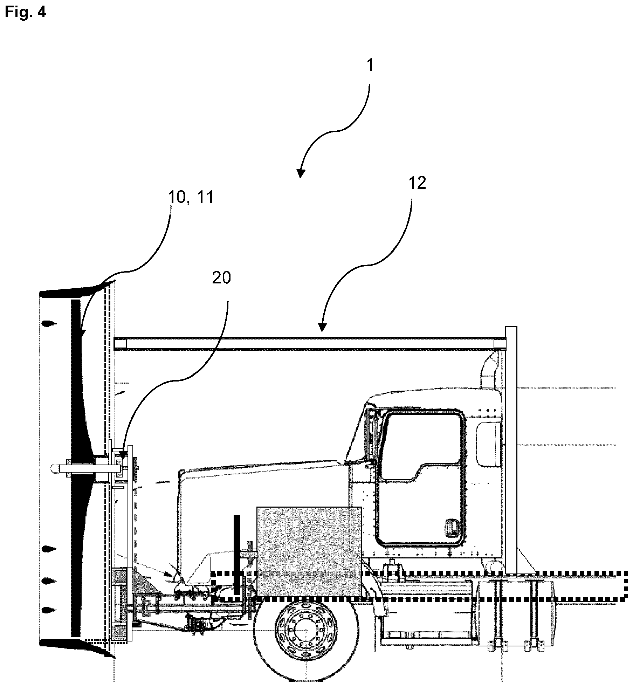

In Fig. 4 sind hierzu bevorzugte Hauptkomponenten des Turbinensystems gezeigt, welche bevorzugt aus einer Windturbine, einer Turbinenhalterung umfassend ein Windschild und einer Drehmoment-Übertragungs-Einheit zum Motor des Fahrzeuges besteht.

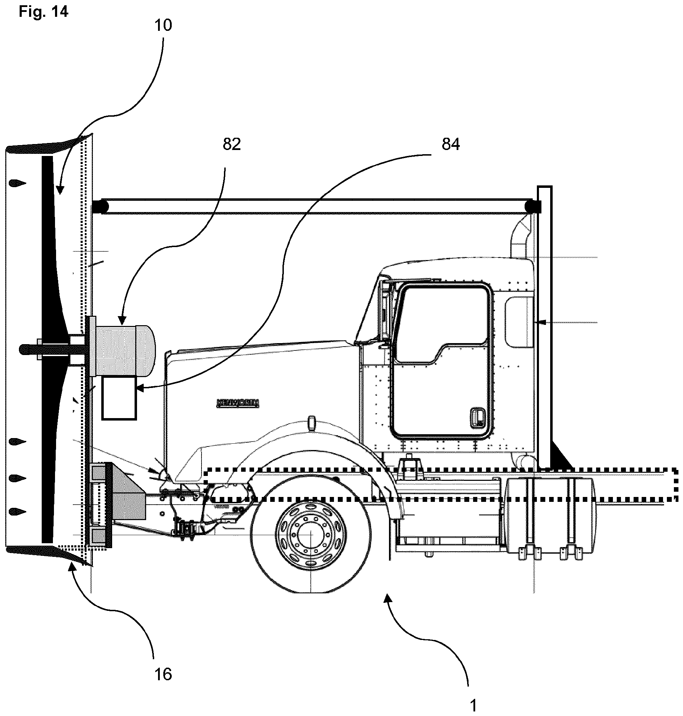

In Fig. 14 wird eine alternative Ausführungsform des Turbinensystems gezeigt, welche anstatt einer Drehmoment-Übertragungs-Einheit einen Generator umfassend eine zugehörige Leistungselektronik zur Erzeugung von Strom aufweist.

Die grundsätzliche Herangehensweise bei der konstruktiven und aerodynamischen Auslegung der Windturbine unterscheidet sich bevorzugt nicht von Windturbinen, welche bei konventionellen Windkraftanlagen des Standes der Technik zum Einsatz kommen, da der Einsatzparameter zur Gewinnung von Energie aus Windkraft sehr ähnlich ist. Windkraftanlagen werden heutzutage für Windgeschwindigkeiten bis 45m/s (ca. 160km/h) und für bereits relativ hohe Drehzahlen ausgelegt. Dies entspricht nahezu dem gewünschten Betriebsbereich, in dem die Windturbine für den CBE-LKW besonders effektiv betrieben werden kann. Eventuell müssen andere Materialien als bei konventionelle Windkraftanlagen verwendet werden, um beim Betrieb einen ausreichenden Sicherheitsabstand zu den Materialgrenzwerten zu garantieren. Lediglich bei der aerodynamischen Auslegung der Rotorblätter der Windturbinen ist bevorzugt darauf zu achten, dass deren Drehrichtung mit der Drehrichtung des LKW Motors bei Vorwärtsfahrt übereinstimmt und diese für eine mittlere (Fahrt-)Windgeschwindigkeit von ca. 25m/s (ca. 90km/h) ausgelegt wird und nicht wie im Windkraftanlagenbau üblich zwischen 10-15m/s. Die Profilgeometrie als und auch die Verwindung des Rotorblattes variiert mit dem Abstand zur Rotorachse signifikant und sollte bevorzugt für diese (Fahrt-)Windgeschwindigkeit von ca. 25m/s angepasst werden. Die Anzahl der Rotorblätter kann bevorzugt 3 sein. Diese Anzahl hat sich im Windkraftanlagenbau bewährt.

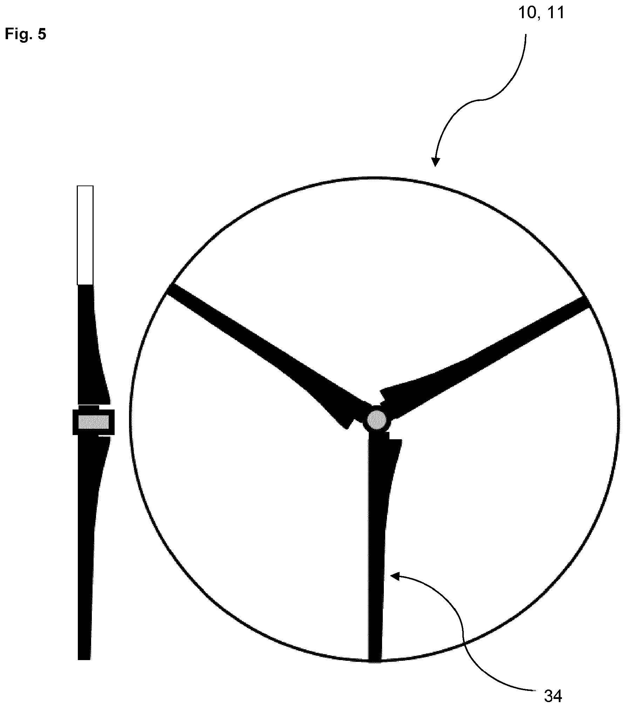

In Fig. 5 ist eine bevorzugte Ausführungsform des Windrades mit drei Rotorblättern dargestellt. Zudem sind bei der Auslegung bevorzugt bereits Schutzeinrichtungen beizufügen, welche in Verbindung mit den anderen Hauptkomponenten des Turbinensystems z.B. ein Überschreiten einer maximalen Drehzahl verhindert. Auch dafür lassen sich bevorzugt technischen Lösungen aus dem Windkraftanlagenbau adaptieren. Beispielsweise kann bei einer Windturbine mit einem Deckband Bremsschuhe mit Federelementen an deren Außenseite angebracht werden, welche beim Überschreiten einer definierten Drehzahl auf die Gondelinnenseite drücken und ein Überschreiten der Drehzahl verhindern.

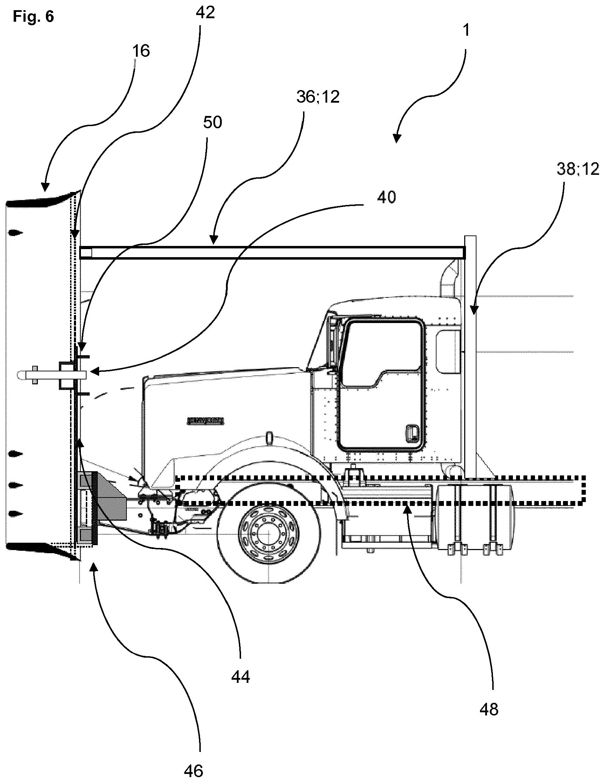

Wie in Fig. 6 dargestellt besteht eine bevorzugte Turbinenhalterung, welche in diesem Falle eine Windturbinen-Halterung (WTH) ist, hauptsächlich aus dem Windschild, in welchem die Windturbine befestigt ist. Das Windschild selbst ist bevorzugt im unteren Bereich an einer Trägerplatte z.B. Schneeflugplatte fixiert, welche bevorzugt zur Vermeidung von Bauteil-Anregungen über ein Feder-Dämpfer-System mit dem Fahrgestell verbunden ist. Im oberen Bereich wird die Austrittskante des Windschildes bevorzugt an z.B. zwei verschiedenen Umfangspositionen durch ein Gestänge abgestützt, welches wiederum die aufgenommenen Axial-Kräfte über einen an der Fahrerhausrückseite positionierten Überrollbügel in das Fahrgestell einleitet. Weitere auf das Windschild wirkende Kräfte werden bevorzugt über mehrere Streben, welche im Bereich der Austrittkante des Windschildes an verschiedenen Umfangspositionen angeordnet sind, zur Rotorachse weitergeleitet und von dort aus über ein Metallgerüst und Träger in das Fahrgestell eingeleitet. Das Windschild wird bevorzugt weitestgehend aus sehr leichtem Material wie z.B. Verbundwerkstoff hergestellt. Im unteren Bereich der Frontseite des Windschildes können zur Vermeidung von Schäden durch z.B. Wild aerodynamisch optimierte Querstreben (Kuhfänger) eingebaut; gegebenenfalls kann zudem noch eine Versteifung vorgenommen werden. Die Außen- und Innenseite des Windschildes soll bevorzugt entgegen der Fahrtrichtung im Durchmesser, wie in Fig.6 angedeutet, wachsen. Dabei muss der Außendurchmesser des Windschildes entlang des Umfangs nicht unbedingt gleichmäßig sein. Dadurch wird die Fahrtwindströmung an der Außenseite des Windschildes bevorzugt aerodynamisch verlustfrei abgelenkt und die Aufweitung des Strömungsgebietes mit niedriger Geschwindigkeit stromab von der Windturbine unterstützt.

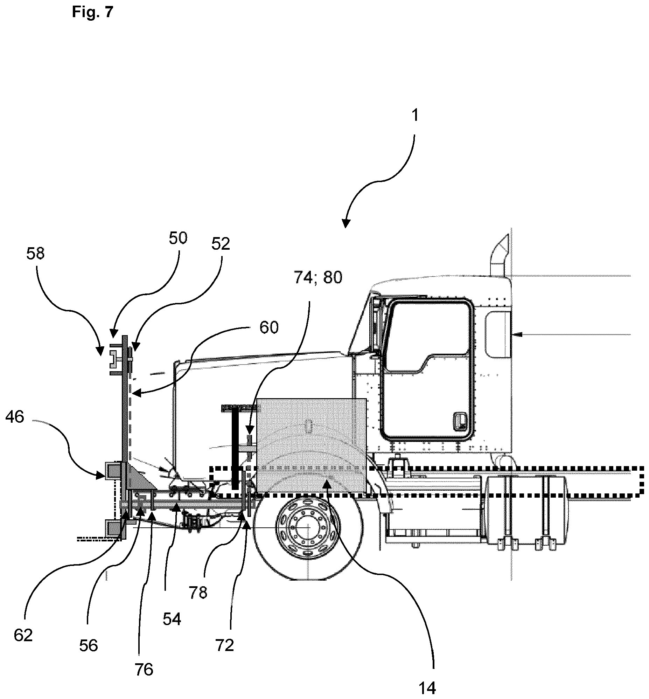

Wie in Fig. 7 beispielhaft dargestellt ist, kann das erzeugte Drehmoment durch die Windturbine über eine Fliehkraftkupplung zu einem Zahnrad 1 mit Freilauf geleitet werden. Die Fliehkraftkupplung wird dabei bevorzugt aus sicherheitstechnischen Gründen eingebaut und kann in Kombination mit einem Freilauf verhindern, dass eine stillstehende bzw. sehr langsam drehende Windturbine vom LKW-Motor angetrieben wird. Der eingebaute Freilauf am Zahnrad 1 stellt dabei bevorzugt sicher, dass eine Drehzahlerhöhung (z.B. beim Beschleunigen) motorseitig nicht auf die Windturbine übertragen werden kann. Auch wird durch den Freilauf der unwahrscheinliche Fall vermieden, dass Drehmomente bei verkehrt herum drehender Windturbine zum Motor übertragen werden. Das Drehmoment wird weiterhin bevorzugt von Zahnrad 1 zum Zahnrad 2 z.B. mithilfe einer Kette 1 übertragen. Die Weiterleitung des Drehmoments zum Motor erfolgt bevorzugt über eine weitere Fliehkraftkupplung 2 und über eine Welle, welche an der Trägerplatte und am Lager 1 befestigt sind. Die Fliehkraftkupplung stellt zum einen sicher, dass ein Drehmoment zum Motor nur dann übertragen wird, wenn der Motor mit einer für die Windturbine akzeptablen Mindestdrehzahl dreht. Zum anderen kann besonders gut gewährleistet werden, dass kein Drehmoment vom Motor zur Windturbine übertragen wird, wenn die Motordrehzahl plötzlich stark abnimmt. Das Lager 2 ist bevorzugt am Fahrgestell montiert. Das Drehmoment wird dann über Zahnrad 3 sowie einer Kette 2 in das Zahnrad 4 eingeleitet, welches fest zwischen Lüfter und Motor verschraubt ist.

Die bevorzugten Ausführungsformen des Turbinensystems weisen eine Reihe von technischen Vorteilen im Vergleich zum Stand der Technik auf:

- Einfacher Aufbau mit wenigen Einzelkomponenten, welche dennoch eine Treibstoffeinsparung um mindestens 30% gewährleistet

- Das Turbinensystem kann weitestgehend unabhängig von dem Fahrzeug eingesetzt werden

- Ein Großteil der verwendeten Einzelteile wird bereits bei anderen Anwendungen in ähnlicher Weise verwendet. Dadurch wird die Nutzung von state of the art Technologie ermöglicht.

- Niedrige Wartungskosten aufgrund einer robusten Konstruktion

- Anwendbarkeit des Turbinensystems bei COE und CBE LKWs insbesondere mit einem $c_w$-Wert größer als 0.4

- Schnelle An- und Abbaubarkeit des Turbinensystems bei Verwendung von Spezialwerkzeug (Plug & Drive)

- signifikante Treibstoffeinsparungen unabhängig von der Art des LKW-Anhängers; Bei bevorzugten Ausführungsformen des Turbinensystems sind keine zusätzlichen Änderungen am Anhänger selbst notwendig.

Weiterhin wird vorteilhafterweise die Individualität eines jeden Trucks/LKWs erhalten und "Verschönerungen" an der LKW-Zugmaschine führen nicht zu größeren Strömungswiderständen. Im Stand der Technik führt die aerodynamische Optimierung eines LKWs hin zum kleinstmöglichen Widerstandsbeiwert $c_w$ zwangläufig bei den LKW-Herstellern zu sehr ähnlich aussehenden LKWs. Dadurch ist eine an die Kundenwünsche angepasste Individualisierung der LKWs nicht möglich. Zudem ermöglicht die Plug & Drive Technik einen schnellen An- und Abbau des Turbinensystems, sodass bspw. Speditionsunternehmen / Trucker selbst entscheiden können, über welchen Zeitraum Treibstoff einsparend gefahren wird.

Ein ganz besonderer Vorteil des erfindungsgemäßen Turbinensystems sowie bevorzugten Ausführungsformen davon ist die Reduktion des Treibstoffs, welcher nötig ist das Fahrzeug anzutreiben. Im Folgenden wird die Treibstoffeinsparung für eine Windturbine beschrieben, welche vor einem LKW montiert ist und nur durch den Fahrtwind angetrieben wird. Dabei ist es besonders bevorzugt, dass die gemeinsame Querschnittsfläche der Windturbine und des Windschildes mindestens 60%, bevorzugt mindestens 80% und besonders bevorzugt mindestens 90% der frontalen Projektionsfläche des LKWs beträgt und frontal an diesem befestigt wird. Für andere Fahrzeuge würde die Querschnittsfläche der Windturbine und des Windschildes bevorzugt in analoger Weise angepasst werden, um ebenfalls die bevorzugte Treibstoffeinsparung zu erreichen.

Ein Teil der im Fahrtwind enthaltenen kinetischen Energie wird von der Windturbine in Form von Drehbewegungsenergie (mechanische Energie) umgewandelt, bevor diese in technisch nicht mehr nutzbare Reibungsenergie aufgrund von Umströmungsverlusten am Fahrzeug verloren gehen würde. Die mechanische Energie wird in Form eines Drehmoments bevorzugt mithilfe einer Kupplung zum Antriebstrang weitergeleitet. Stromab von der Windturbine hat sich die Strömungsgeschwindigkeit des Fahrtwindes aufgrund der entnommenen kinetischen Energie bspw. bei dem in Fig. 7 gezeigten LKW mit einem Turbinensystem auf ca. 40% - 50% der anfänglichen Geschwindigkeit reduziert. Die verlangsamte Strömungsgeschwindigkeit um den LKW herum bewirkt eine signifikante Widerstandsreduktion (Widerstandskraft in Fahrtwindrichtung) gemäß Equ. 1. Gleichzeitig erzeugt die Windturbine ihrerseits signifikante Axialkräfte (Kräfte in Fahrtwindrichtung) hauptsächlich aufgrund der aerodynamischen Kräfte auf den Windturbinenschaufeln und weniger aufgrund von Widerstandsverlusten (Equ. 2, vgl. Gasch, Robert; Windkraftanlagen; 2nd edition, B.G. Teubner Stuttgart, p.156). Diese Kräfte werden im Sinne der Erfindung auch bevorzugt als aerodynamische axiale Kräfte der Turbine bezeichnet. Die Turbinenschaufeln können bevorzugt derart aerodynamisch optimiert werden, dass Widerstandsverluste kaum noch auftreten und hohe Schaufelspitzenverluste durch ein Deckband an den Schaufeln weitestgehend vermieden werden können.

| | |
|---|---|
| $$F_W = c_w \cdot A_{front} \cdot \frac{\rho_{air}}{2} c_1^2$$<br><br>$F_W$ - Widerstandskraft [N]; $c_w$ - Widerstandsbeiwert;<br>$A_{front}$ - frontale LKW - Projektionsfläche [m$^2$] ;<br>$c_1$-Fahrtwindgeschwindigkeit vor der Windturbine [m/s] | Equ. 1 |

$$F_S = F_{ST} \cdot c_s(\lambda) \; ; \; F_{St} = \frac{\rho_{air}}{2} \cdot \pi \cdot R^2 \cdot c_0^2$$

$F_s$ - axiale Windturbinenkraft [N]; $c_s$ - Schubbeiwert [--];
$F_{St}$ - Referenzkraft [N]; $R$ - Radius Windturbine [m];
$c_0$ -Vorwärtsgeschwindigkeit des Fahrzeuges [m/s];
$\rho_{air}$ -Luftdichte[kg/m$^3$] | Equ. 2

Aus diesen Gründen wird die Windturbine bevorzugt derart entworfen, dass die zusätzlich erzeugten axialen aerodynamischen Kräfte der Windturbine genau durch die eingesparten axialen Widerstandskräfte des LKW's kompensiert werden. Während die Kräftebilanz in axialer Richtung (in Fahrtwindrichtung) bei einem LKW mit und ohne einem Turbinensystem identisch ist, wird der LKW-Motor vom LKW mit Turbinensystem vorteilhafterweise durch die zur Verfügung stehende mechanische Energie von der Windturbine entlastet. Die Leistung der Windturbine kann konservativ mithilfe von Equ. 3 abgeschätzt werden (vgl. Gasch, Robert; Windkraftanlagen; 2nd edition, B.G. Teubner Stuttgart, p.156).

$P=c_0 \cdot F_{ST} \cdot c_p(\lambda)$
$P$-Windturbinenleistung [W]; $F_{ST}$ - Referenzkraft [N];
$c_p$-Leistungscoeffizient [--];
$c_0$ - Vorwärtsgeschwindigkeit des Fahrzeuges [m/s] | Equ. 3

Die entnommene Windenergie aus dem Fahrtwind führt wie vorteilhafterweise wie bereits erwähnt zu einer reduzierten Strömungsgeschwindigkeit stromab von der Windturbine, welche auch weiter stromab erhalten bleibt. Überträgt man die experimentellen Ergebnisse aus dem Windkraftanlagenbau auf den CBE-LKW mit Turbinensystem, dann würden bei 1 und 6 Windturbinen-Durchmesser stromab von der Windturbine noch mittlere Strömungsgeschwindigkeit um dem LKW zu erwarten sein, welche 40% und 50% der ursprünglichen Fahrtwindgeschwindigkeit (stromauf von der Windturbine) entsprechen würden (vgl. Gasch, Robert, Twele, Jochen, Windkraftanlagen, 7th edition, Vieweg Teubner, p. 155).

Abhängig vom Widerstandbeiwert $c_w$ eines Fahrzeuges und bevorzugt eines jeweiligen LKW's/Sattelschlepper (Indikator für eine gute oder schlechte aerodynamische Oberfläche) kann das Einsparpotential bei den Treibstoffkosten zwischen 8k€ und 17k€ pro Jahr liegen, wenn der LKW/Sattelschlepper eine Laufleistung pro Jahr von mehr als 105.000km aufweist (siehe Berechnung basierend auf Randbedingungen der Tab. 1).

Zur Berechnung der 30%igen Treibstoffeinsparung bei der bevorzugten Ausführungsform eines CBE LKW mit Turbinensystem wurde zunächst der minimal gemessene Treibstoffverbrauch und die minimal gemessene Motorleistung eines Standard-LKWs für verschiedene Randbedingungen bestimmt, welche in Tab. 2 zusammengefasst sind. Bei einem Standard-LKW mit einem maximalem Gesamtgewicht von 42t und einer konstanten Fahrtgeschwindigkeit von 25m/s (57mph) ergibt sich eine Mindest-Motorleistung von 90kW und ein Mindestverbrauch von 20 l Diesel. Diese Werte werden für die weiteren Berechnungen zugrunde gelegt.

Um nun auf die Treibstoffeinsparung von 7,6 l Diesel (siehe Tab. 2, 42t Truck@57mph) beim CBE-LKW mit Turbinensystem schließen zu können, muss vorher noch die Windturbinenleistung von 34 kW (siehe ebenfalls Tab. 2, gleiche Zeile) mithilfe von empirischen Formel[1,2] abgeschätzt werden.

[1] Gasch, Robert; Windkraftanlagen; 2nd edition, B.G. Teubner Stuttgart, p.157
[2] Gasch, Robert, Twele, Jochen, Windkraftanlagen, 7th edition, Vieweg Teubner, p. 155

Die Windturbinenleistung lässt sich mit Equ. 3 bestimmen. Für die (Fahrt-) Windgeschwindigkeit $c_0$ werden die vorgegebenen 25m/s (57mph) eingesetzt. Der benötigte Parameter $c_p$ = 0,52 wird aus einem Diagramm 1,2 für eine Schnelllaufzahl von 7 entnommen. Die Schnelllaufzahl beschreibt das Verhältnis von Umfangsgeschwindigkeit an z.B. der Schaufelspitze zur (Fahrt-)Windgeschwindigkeit. Die noch fehlende Bezugskraft $F_{St}$ lässt sich mit Equ. 4 berechnen, wobei Luftdichte, Windturbinenradius aus Tab. 1 entnommen werden können und die (Fahrt) Windgeschwindigkeit bereits bekannt ist.

$$F_{ST} = \frac{\rho}{2} \cdot \pi \cdot R^2 \cdot c_0^2$$
Equ. 4

Setzt man die Zahlen in Equ. 4 ein, dann erhält man als Ergebnis 2650 N, welche in Equ. 3 mit den anderen bekannten Parametern eingesetzt zu einer Windturbinenleistung von ca. 34kW führt.

Auf die besagte Treibstoffeinsparung von 7.6 l Diesel kommt man nun, wenn man vereinfacht die 34kW Windturbinenleistung ins Verhältnis zur Mindest-Motorleistung von 90kW (siehe Tab. 2) setzt und mit dem Mindest-Treibstoffverbrauch multipliziert: 7,6l = 34kW/90kW*20l. Die Treibstoffeinsparung beträgt damit mindestens 30%.

Die Berechnung der Strömungswiderstandskraft Fw mit Equ. 1 führt beim Standard-CBE LKW mit einem angenommenen $c_w$-Wert von 0.7, mit $c_0 = c_1$= 25m/s und den bereits bekannten Parametern aus Equ. 2 zu einem Wert von 2952 N. Führt man nun die gleiche Rechnung mit einer Fahrt-Windgeschwindigkeit von 10,5m/s durch, was ungefähr die Geschwindigkeit entspricht, welche zwischen Windturbine und CBE LKW herrschen würde, wenn der LKW sich mit 25m/s bewegt, dann erhält man 520 N. Nun muss man noch die zusätzliche Axialkraft von der Windturbine mit hinzurechnen, welche beim CBE-LKW mit Turbinensystem mitberücksichtigt werden muss. Die Axialkraft von 2385 N berechnet sich aus der bereits berechneten Bezugskraft $F_{St}$ und einem Schubkraftkoeffizienten $c_s$ = 0,9 welcher aus einem Diagramm[3,4] für eine Schnelllaufzahl von 7 entnommen werden kann. Damit ergibt sich eine Gesamtkraft in axialer Richtung von 2905 N, welche ungefähr dem Wert vom Standard LKW entspricht. Weitere Vergleiche zwischen den Axialkräften mit und ohne einem Turbinensystem sind in Tab. 1 dargestellt.

[3] Gasch, Robert; Windkraftanlagen; 2nd edition, B.G. Teubner Stuttgart, p.157

[4] Gasch, Robert, Twele, Jochen, Windkraftanlagen, 7th edition, Vieweg Teubner, p. 155

*Experimenteller Test im Windkanal*

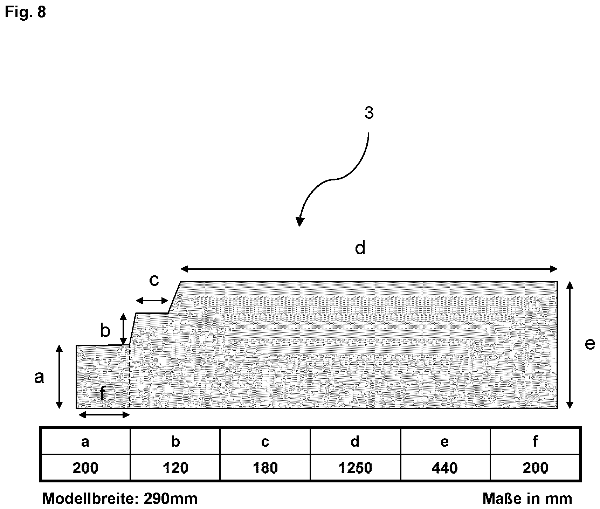

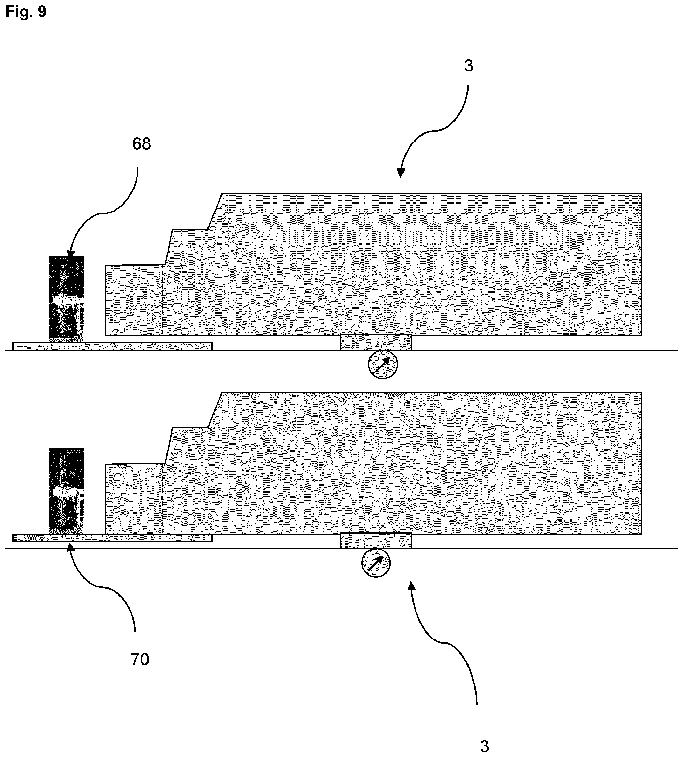

Zur Bestätigung des Wirkprinzips des Turbinensystems werden verschiedene Sattelschlepper-Typen CBE und COE mit Trailer im Modellmaßstab 1:9 experimentell in einem Windkanal vermessen. Die genauen Abmaße des LKW Modells mit und ohne Haube sind der Fig. 8 zu entnehmen. Fig. 9 zeigt eine schematische Darstellung des LKW Modelles, wobei bei der oberen Darstellung eine Modell-Windturbine am Windkanalboden angebracht vorliegt und bei der unteren Darstellung eine Modell-Windturbine am LKW Modell befestigt vorliegt. Bei der Modell-Windturbine wird auf einen Dreiblatt-Rotor mit Auftriebs-Profil im Durchmesser von ca. 350mm von der Firma Horizon (FCJJ-39) zurückgegriffen, welcher bezogen auf das LKW-Modell einen bevorzugt maximalen Durchmesser aufweist. Das Verhältnis aerodynamisch erzeugter Kräfte zu den Schaufelverlusten sind im Modellmaßstab wesentlich größer, als beim realen Betrieb der Windturbine an einem LKW. Dies erklärt die maximal ermittelte Schnelllaufzahl von 2.4 (an der Schaufelspitze) bei experimentellen Vortests. Zum einen ist dies auf das aerodynamisch schlechtere Schaufelprofil und auf die weitaus größeren Drall- und Schaufelspitzenverluste der Modellturbine zurückzuführen. Dadurch steigt der Anteil der Widerstandskraft vom Windturbinenmodell an der Gesamt-Widerstandskraft von Windturbine und LKW. Um die Ähnlichkeit der Verluste von Windturbine und LKW zu wahren und damit die Übertragbarkeit der Modell-Test-Ergebnisse auf die Realität in Bezug auf die relativen Widerstandskräfte zuzulassen, weist der Modell-LKW einen größeren cw-Wert als die heutigen LKWs in der Realität auf. Daher ist die Fahrzeugfront des Modell-LKW kantiger, als es für reale LKWs der Fall ist. Für das CBE-LKW-Modell wurde ein cw = 0.81; für den COE -LKW ein cw = 0.79 ermittelt.

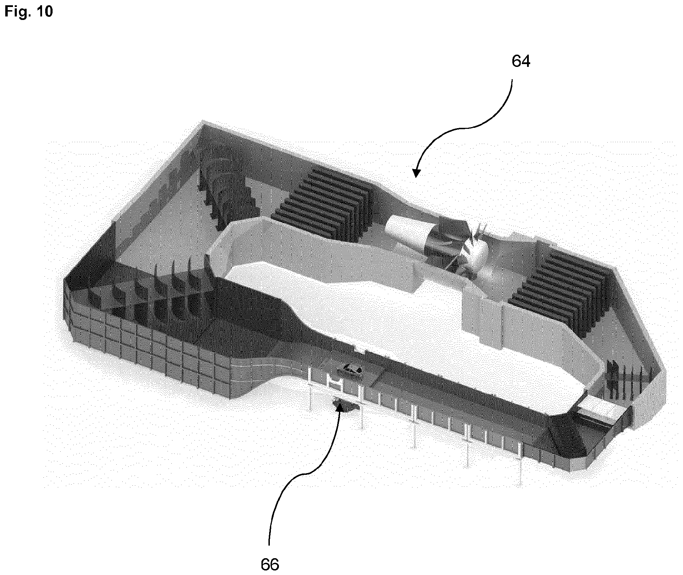

Fig. 10 zeigt den Windkanal in dem der experimentelle Test durchgeführt wurde. Die Messkabine weist Abmaße von 2m x 1.41 m auf. Die Messung wurde in der Messsektion MB1 durchgeführt. In der Abbildung ist die Messsektion MB1 durch die Positionierung eines Modellautos ersichtlich. An der Messsektion befindet sich im Boden eine 6-Komponentenwaage. Zudem ist die Messsektion MB1 mit einer Zwischendecke versehen, um einerseits eine ungestörte Strömung (ohne Grenzschicht) bis zum LKW zu gewährleisten und andererseits Unterbodeneffekte des LKWs bei der Messung zu berücksichtigen. Das LKW-Modell wird ca. 20 mm vom Boden entfernt mithilfe einer Stütze aufgeständert positioniert und direkt mit der Messwaage verbunden. Die Windturbine wird dabei in zwei Varianten im Windkanal montiert (vgl. Tabelle 3)Die Windgeschwindigkeit wird mit zwei Prandtl-Rohren mit einer Genauigkeit von +/-0.05m/s gemessen. Diese befinden sich stromauf und -ab vom LKW-Modell in einem Abstand von ca. 100 mm und von der Deckenwand in einem Abstand von ca. 200 mm.Der Abstand der Windturbine zur LKW-Front lässt sich axial (in Strömungsrichtung) zwischen 0.3 D und 0.9 D variabel verschieben. D repräsentiert den Durchmesser der Modell-Windturbine. Für diesen Test werden mehrere axiale Positionen ausgewählt: 0.3 D, 0.4 D, 0.7 D, 0.9 D. Die Windturbine ist dabei mittig vor der LKW-Front positioniert. Die Modell-Windturbine ist im Nabenbereich mit einem kleinen Generator ausgestattet, mit dem Strom erzeugt werden kann. Die Spannung wird mithilfe eines Multimeters bei einem konstanten elektrischen Widerstand von 50 Ohm gemessen.

Die Drehzahl der Windturbine wird während des Tests mithilfe der ausgelesenen Spannungsfrequenz vom Windturbinenmotor bestimmt, welcher direkt am Oszilloskop ablesbar ist. Um den Umrechnungsfaktor von der Spannungsfrequenz zur Windturbinendrehzahl zu erhalten, wird diese vor dem Test optisch mithilfe eines frequenzabhängigen Stroboskop bei kleinen Drehzahlen (2Hz) bestimmt.

Lokale Geschwindigkeiten am LKW können mit einem Flügelrad-Anemometer näherungsweise bestimmt werden.

Folgende Messinstrumentierungen werden bei den beschriebenen Experimenten verwandt:

| Multimeter | Fluke 179 True RMS Multimeter |
|---|---|
| Oszilloskop | Agilent 54624A oscilloscope 100MHz, 200MSa/s |
| Rauchvisualisierunp | Tiny FX |
| Flügelradanemomener | Messsonde xx43 Testoterm KG |
| Stroposkop | Digita 1-20000 Hz Mawomatic Mayer Wonisch Mietzel GmbH SLV1000-Studio (Leuchte) |

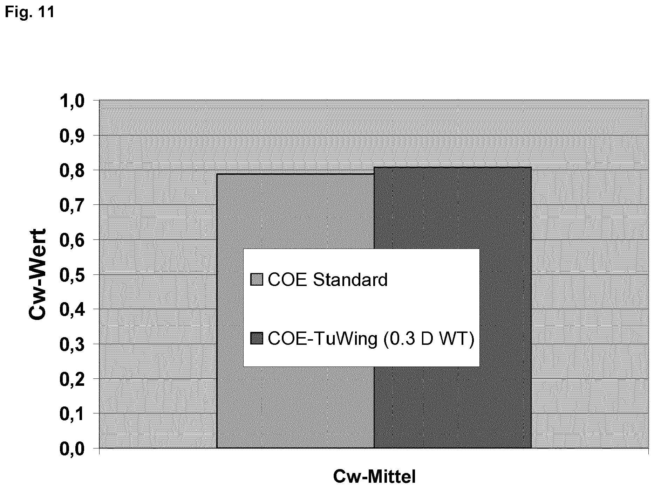

Fig. 11 zeigt die Ergebnisse der Bestimmung des $c_w$-Wertes. Der Cw-Wert vom LKW mit vorgeschalteter Windturbine (COE-TuWing) lässt sich selbst mit der nicht optimierten Modell-Windturbine derart einstellen, dass dieser dem Cw-Wert eines Standard-LkW entspricht. Darüber hinaus kann im Fall des LKWs mit vorgeschalteter Windturbine noch zusätzlich Energie erzeugt werden.

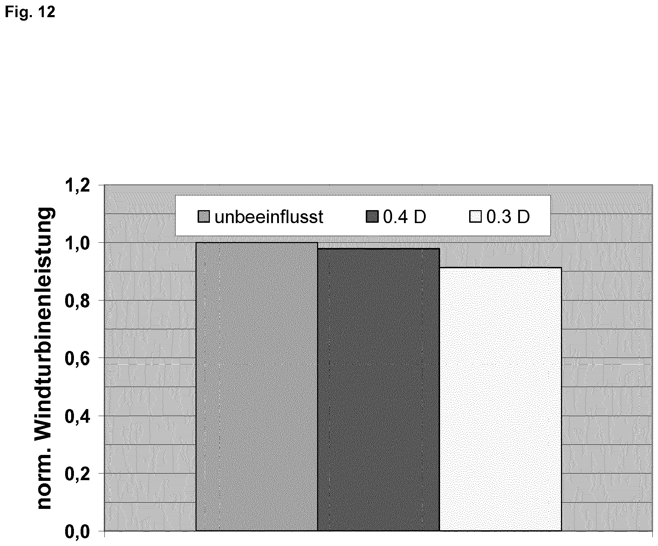

Fig. 12 zeigt die experimentellen Ergebnisse für die Bestimmung der normalisierten Windturbinenleistung in Abhängigkeit des Abstandes der Windturbine von der Fahrzeugfront. Um Interferenzeffekte zwischen Windturbine und dem LKW zu verhindern ist ein Abstand der Rotorebene, d.h. der Windturbine, zur Fahrzeugfront des LKW von 0,3-0,4 Windturbinen-Durchmesser optimal. Bei diesem Abstand kommt es zu keinem oder nur einem besonders geringen Leistungsabfall der Windturbine.

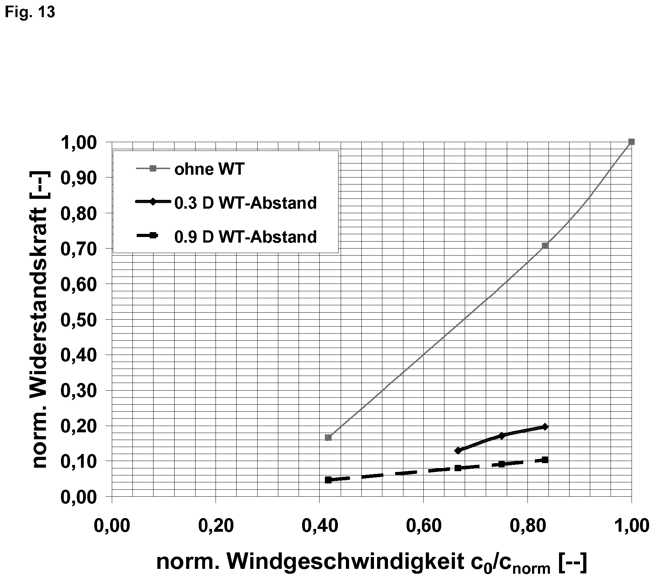

Fig. 13 zeigt die experimentellen für die normalisierte Widerstandskraft in Abhängigkeit der normalisierten Windgeschwindigkeit. Aus den experimentellen Daten der Fig. 13 lässt sich sehr gut der Einfluss des Windturbinen-Windschattens auf den LKW bei Variation des Abstands WT-LKW ablesen. Die experimentell ermittelten Widerstandskräfte bei der Messkonfiguration Konfig. 1 zeigen eine signifikante Abnahme bei Anwesenheit der sich vom Fahrtwind rotierenden Windturbine. Die in Fig. 13 gezeigten Werte werden jeweils auf $c_{norm}$ = 12m/s bzw. auf die unbeeinflusste Widerstandkraft normiert, welche sich bei 12m/s einstellt. Die signifikante Reduktion der Widerstandskraft vom LKW im Windschatten der Windturbine ist ausreichend, um die wiederum signifikanten aerodynamischen und dissipativen Kräfte der Modell-Windturbine nahezu vollständig zu kompensieren.

Fig. 15 zeigt eine schematische Illustration der Lenkung des Luftstromes durch das Windschild und Windturbine für eine bevorzugte Ausführungsform des Turbinensystems am Bespiel eines CBE LKWs. Fig. 15 A zeigt eine Seitenansicht des Turbinensystems, angebracht an einem LKW. Fig. 15B zeigt die Seitenansicht mit Fokus auf das Turbinensystem und Fig. 15C eine Frontalansicht mit Fokus auf das Turbinensystem. Wie in Fig. 15 ersichtlich, decken die beiden Komponenten aus Windschild und Windturbine nahezu die gesamte frontale Projektionsfläche des LKWs ab. Durch das Windschild wird ein Teil des energiereichen Fahrtwindes am Fahrzeug vorbeigelenkt (Energie-Luftstrom), während der andere energiereiche Anteil durch die Windturbine strömt und das Volumen auf der Leeseite (Rückseite) des Windschildes auffüllt (Windschatten-Luftstrom). Energie-Luftstrom und Windschatten-Luftstrom weisen unmittelbar stromabwärts vom Windschild eine deutliche Geschwindigkeitsdifferenz auf. Die Geschwindigkeit des Luftstromes wird durch Vektorpfeile dargestellt. Die Geschwindigkeitsreduktion wird einerseits durch die Umwandlung von kinetischer in nutzbare Energie erreicht, dadurch dass der Luftstrom die Windturbine antreibt. Andererseits führt das Aufweiten des Windschatten-Luftstroms auf der Rückseite des Windschilds zu einer signifikanten Reduktion der Geschwindigkeit, welche auf die Fahrzeugfront einwirkt, und somit zu einem geringeren Fahrtwindwiderstand.

In der bevorzugt gezeigten Ausführungsform ist das Windschild ein ringförmiges Gehäuse, dessen Abstand sich zwischen der Außenkonturkante und der Windturbinenachse zu der dem Fahrzeug zugewandten Seite vergrößert. Ersichtlich ist der Innendurchmesser des Windschildes an der axialen Position der Rotorblattvorderkante größer als der Außendurchmesser der Windturbine, sodass das Windschild die Windturbine umrandet. In den Seitenansichten der Fig. 15A,B zeigt sich zudem der radiale Anstieg der Außenkontur von einem vorderen, minimalen Abstand zur Windturbinenachse zu einem hinteren dem LKW zugewandten maximalen Abstand. Der bevorzugte Anstieg ist nicht gleichmäßig, sondern erfolgt im vorderen Abschnitt flacher und im hinteren Abschnitt steiler und ist zudem von der Umfangsposition abhängig. Der resultierende Steigungswinkel an der am weitesten stromab gelegenen axialen Position der Windschildaussenkontur (und in diesem Fall auch größter Abstand zwischen Windschildaußenkontur und Windturbinenachse) ist ca. 20°. Der resultierende Steigungswinkel an der am weitesten stromab gelegenen Position der Windschildaußenkontur auf 6 Uhr Umfangsposition und damit der kleinste Abstand zwischen Windschildaussenkontur und Fahrbahnboden ist ca. 8°. Stromauf von der Windturbine ist der resultierende Steigungswinkel im vorderen Abschnitt des Windschilds nahezu 0°. Zur Vermeidung von Ablösungen an der Innenkonturseite des Windschildes bei größeren Steigungswinkeln als 8° kann es bevorzugt sein z.B. Luftschlitze einzusetzen, durch welche energiereiche Luft von der Außenkontur (Energie-Luftstrom) in die ablösegefährdeten Zonen eingeblasen werden kann bzw. energiearme Luft (Windschattenluftstrom) von der Innenkontur aus den ablösegefährdeten Zonen mittels z.B. Venturi-Effekt abgesaugt werden. Hierdurch wird sowohl der Energie-Luftstrom besonders verlustfrei abgelenkt, als auch der Windschatten-Luftstrom besonders verlustfrei aufgeweitet. Das Einleiten der Windschildkräfte in die Windturbinenhalterung sollte bevorzugt mit aerodynamischen Profilstreben erfolgen, welche gleichzeitig zur Drallreduktion verwendet werden können, um eine wirbelarme Führung der Luftströme entlang des Fahrzeuges zu gewährleisten. Insbesondere kann zudem gewährleistet werden, dass beim Zusammenführen beider Luftströme, d.h. des Windschatten-Luftstromes sowie des Energie-Luftstromes, an deren Scherschicht keine verlustbehafteten Wirbel auftreten.

In der Frontalansicht der Fig. 15C ist ersichtlich, dass das die frontale Projektion der Außenkontur des Windschildes in der bevorzugten Ausführungsform ein abgerundetes Rechteck bildet, welches an die Form der Fahrzeugfront angepasst ist. Hierdurch lässt sich eine besonders hohe Abdeckung der Fahrzeugfront von mehr als 90% umsetzen und eine energetisch günstige Fahrtwindabschirmung erreichen.

Analog zur Fig. 15 zeigt Fig. 16 eine schematische Illustration der Lenkung des Luftstromes durch das Windschild und eine Turbine für eine bevorzugte Ausführungsform des Turbinensystems nunmehr am Beispiel eines Zuges. Bei der dargestellten Ausführungsform ist die Turbine eine Gasturbine (Aerorderivativ), welche vor die Fahrzeugfront eines Zuges gebracht wird. Auch in diesem Fall decken das Windschild und die Gasturbine (Aerodervativ) die frontale Projektionsfläche des Zuges nahezu vollständig ab. Durch das Windschild wird wiederum ein Teil des energiereichen Fahrtwindes am Zug vorbeigelenkt (Energie-Luftstrom), während ein anderer energiereiche Anteil durch die Gasturbine (Aerodervativ) strömt (Windschatten-Luftstrom). Durch Aufweitung des Windschattenstromes in Kombination mit einer Reduktion der Geschwindigkeit des Luftstromes durch das Passieren der Gasturbine (Aerodervativ), kommt es zu einer signifikanten Reduktion des Fahrtwind-Widerstandes. Der resultierende Steigungswinkel an der am weitesten stromab gelegenen axialen Position der Windschildaussenkontur (und in diesem Fall auch größter Abstand zwischen Windschildaußenkontur und Windturbinenachse) ist ca. 15°.

Zudem kann eine direkte Einspeisung des durch die Gasturbine (Aeroderivativ) erzeugten Stromes in ein Stromnetz erfolgen (nicht gezeigt).

Die in Fig. 17 dargestellten Ergebnisse zur Zusammensetzung des Fahrtwind-Widerstandes eines LKW mit und ohne Windturbine ohne Windschild sind analytisch auf Basis von Windkanaltests mit einer am LKW-Modell montierte Windturbine ohne Windschild (siehe Fig. 9) ermittelt worden. Durch das Hinzufügen eines Windschildes kann die gesamte rechteckige Fahrzeugfront des LKWs abgedeckt werden, sodass der LKW insgesamt gesehen in ein Gebiet niedriger Geschwindigkeiten gehüllt werden kann. Erste Analysen haben gezeigt, dass die in Fig. 17 dargestellte Fahrtwindwiderstandsanteile vom LKW bei einem LKW mit dem erfindungsgemäßen Turbinensystem mit Windschild wesentlich kleiner sein werden. Die zusätzliche axiale Kraft aufgrund des Windschilds lässt sich dadurch mehr als kompensieren, sodass auch der Gesamtbewegungswiderstand des Fahrzeuges kleiner ist als bei einem Fahrzeug mit einer betriebenen Windturbine ohne Windschild.

**Bezugszeichenliste**

| | |
|---|---|
| 1 | Fahrzeug mit Turbinensystem |
| 2 | Fahrzeug ohne Turbinensystem |
| 3 | Modell LKW |
| 10 | Turbine |
| 11 | Windturbine |
| 12 | Turbinenhalterung |
| 14 | Motor des Fahrzeuges |
| 16 | Windschild (auch bezeichnet als Gondel bzw. Ringgehäuse) |
| 18 | Kuhfänger |
| 20 | Mechanische Kupplung zwischen Windturbine und Motor |
| 22 | Staudruck |
| 24 | Grenzschicht |
| 26 | Fahrtrichtung |
| 28 | Luftwiderstand durch Windturbine |
| 30 | Fahrwiderstand des Fahrzeuges (Roll- und Luftwiderstand) |
| 32 | Motorkraft |
| 34 | Rotorblatt |
| 36 | Gestänge der Windturbinenhalterung |
| 38 | Überrollbügel der Windturbinenhalterung |
| 40 | Vaterstück der Fliehkraftkupplung |
| 42 | Streben |
| 44 | Metallgerüst |
| 46 | Trägerplatte |

48      Fahrgestell des Fahrzeuges
50      Schutz und Montagehilfe
52      Zahnrad 1
54      Welle
56      Fliehkraftkupplung 2
58      Mutterstück der Fliehkraftkupplung
60      Kette 1
62      Zahnrad 2
64      Windkanal
66      Messsektion MB1
68      Modell-Windturbine auf dem Windkanalboden montiert
70      Modell-Windturbine an dem LKW-Modell montiert
72      Zahnrad 3
74      Zahnrad 4
76      Lager 1
78      Lager 2
80      Kette 2
82      Generator
84      Leistungselektronik (zugehörig zum Generator)
86      Windschatten-Luftstrom
88      Energie-Luftstrom
90      Gasturbine (Aeroderivativ)

**Tab. 1 :** Randbedingungen für das Treibstoff-Einspar-Potential[5,6]

| Boundary conditions | | | |
|---|---|---|---|
| **Luftdichte** | 1,20 | kg/m$^3$ | |
| **Radius Windturbine** | 1,50 | m | |
| **Frontfläche LKW** | 11,25 | m$^2$ | |
| | | | |
| **Bezugskraft $F_{St}$** | **Wind speed stromauf der Windturbine** | | |
| | **25m/s** | **30m/s** | **45m/s** |
| **$F_{St}$[N]** | 2650 | 3817 | 8588 |

| Schnelllaufzahl $\lambda_A$[--] | $c_1/c_0$ [--] | $c_p$ [--] | $c_s$[--] | $c_M$ [--] |
|---|---|---|---|---|
| **7** | 0,35 | 0,52 | 0,90 | 0.075 |
| 4 | 0,72 | 0,39 | 0,50 | 0,095 |

| Truck $F_W$[N] + $F_S$[N] @ $c_0$=25m/s ($c_0$ = 30m/s) | ohne TUNING | mit TUNING | | |
|---|---|---|---|---|
| | | $c_p$ = 0.52 | $c_p$ = 0.39 | |
| **$c_w$ = 1.1 (worse aerodynamic shape)** | 4640N (6682N) | 2953N (4253N) | 3730N (5372N) | |
| **$c_w$ = 0.7 (standard aerodynamic shape)** | 2952N (4252N) | 2746N (3955N) | 2856N (4112N) | |
| **$c_w$ = 0.5 (good aerodynamic shape)** | 2109N (3037N) | 2646N (3827) | 2418N (3482N) | |
| **Truck engine unload capacity** | | 34kW (59kW) | 26kW (44kW) | |

[5] Gash, Robert; Windkraftanlagen; 2nd edition, B.G. Teubner Stuttgart, p. 157
[6] Boh/Elmendorf, Strömungsmaschinen 1 (Fluidmachine 1), Kamprath-Reihe, 11th edition, p. 221

**Tab. 2:**

Einsparpotential von Treibstoff und Kosten für verschiedene LKWs mit *TUNING* Technologie[7]

**Fuel saving capability**

| Truck unloaded (0t load), horizontally, to overcome drag and roll resistance (c_w = 0.7) | minimum power [kW] to overcome drag and roll resistance | fuel consumption in [l] min | fuel consumption in [l] max | min.saving with TUNING [l] per 100km diesel | min.saving with TUNING [kW] | max.saving with TUNING [l] per 100km diesel | max.saving with TUNING [kW] |
|---|---|---|---|---|---|---|---|
| 42t Truck @ 57mph | 90 | 20 | 24 | 7,6 | 34 | 9,1 | 34 |
| 60t truck @ 57mph | 110 | 30 | 33 | 9,3 | 34 | 10,2 | 34 |
| 42t Truck @ 68mph (*) | 125 | 27 | 32 | 12,7 | 59 | 15,1 | 59 |
| 60t truck @ 68mph (*) | 150 | 38 | 43 | 14,9 | 59 | 16,9 | 59 |

**cost saving capability**

| Truck unloaded (0t load), horizontally, to overcome drag and roll resistance (c_w = 0.7) | minimum power [kW] | diesel prize per L [€] | fuel consumption in [l] min | fuel consumption in [l] max | Mileage [km per year] | min.saving with TUNING [kW] | min.saving with TUNING [€] | max.saving with TUNING [kW] | max.saving with TUNING [€] |
|---|---|---|---|---|---|---|---|---|---|
| 42t Truck @ 57mph | 90 | 1 | 20 | 24 | 105000 | 34 | 7933,3 | 34 | 9520,0 |
| 60t truck @ 57mph | 110 | 1 | 30 | 33 | 105000 | 34 | 9736,4 | 34 | 10710,0 |
| 42t Truck @ 68mph (*) | 125 | 1 | 27 | 32 | 105000 | 59 | 13381,2 | 59 | 15859,2 |
| 60t truck @ 68mph (*) | 150 | 1 | 38 | 43 | 105000 | 59 | 15694,0 | 59 | 17759,0 |

(*) values estimated

[7] Nylund, Nils-Olof; Heavy-duty truck emissions and fuel consumption simulating real-world driving in laboratory conditions; VTT technical research centre of Finnland; DEER conference, Aug 21-25, Chicago, Illonois, USA

**Tab. 3** Messkonfigurationen und Randbedingen für die Messung im Windkanal

| Messkonfigurationen | |
|---|---|
| Konfig 1 | LKW-Modell mit Kraftwaage verbunden. Windturbine separat auf der Messkabine montiert (Kräfte werden von der Kraftwaage nicht erfasst) |
| Konfig 2 | Windturbine über einen Steg mit den LKW-Modell verbunden (Widerstandskraft von LKW und Windturbine werden zusammen von Kraftwaage erfasst) |
| **Randbedingungen** | |
| $T_{Luft}$ | 11°C |
| $\rho_{Luft}$ | 1.25 kg/m$^3$ (@11°C) |
| $A_{LKW}$ Front | 0.1334 m$^2$ |
| $C_W$ | 0.79 (COE-LKW) |
| $\lambda_{Tip}$ | ≈2.4 (Schnelllaufzahl @ Schaufelblatt-Anstellung 6°) |
| | LKW-Modell im Windkanal derart ausgerichtet, dass Windkanal-Anströmung keine Seitenkräfte auf den LKW erzeugt |

**Patentansprüche**

1. Kombination aus Fahrzeug (2) und Turbinensystem zur Treibstoffeinsparung bei dem Fahrzeug (2) wobei das Turbinensystem eine Turbine (10) und eine Turbinenhalterung (12) mit einem Windschild (16) umfasst, wobei das Windschild (16) und die Turbine (10) eine Querschnittsfläche aufweisen, welche mindestens 60%, bevorzugt mindestens 80% und besonders bevorzugt mindestens 90% der frontalen Projektionsfläche des Fahrzeuges beträgt und die Turbine (10) mit Hilfe der Turbinenhalterung (12) an der Fahrzeugfront und/oder an einem Fahrgestell vor der Fahrzeugfront angebracht ist, wobei das Windschild (16) ein ringförmiges Gehäuse ist, welches die Turbine (10) umrandet und eine Außenkontur aufweist, deren Abstand zur Drehachse der Turbine sich zu der dem Fahrzeug (2) zugewandten Seite vergrößert, wobei das Anwachsen des Abstandes zwischen der Außenkontur des Windschildes (16) und der Drehachse der Turbine durch einen Steigungswinkel von 5° bis 35° gekennzeichnet ist und die Außenkontur des Windschildes (16) in der frontalen Projektion nicht kreisförmig ist, sondern an die Form der frontalen Projektionsfläche der Fahrzeugfront angepasst ist und bevorzugt ein abgerundetes Rechteck bildet.

2. Kombination aus Fahrzeug (2) und Turbinensystem nach dem vorherigen Anspruch **dadurch gekennzeichnet, dass** der Abstand zwischen Turbine (10) und der Fahrzeugfront zwischen 10 - 200 %, bevorzugt zwischen 20% und 90% und besonders bevorzugt zwischen 30% und 80% des Durchmessers der Turbine (10) beträgt.

3. Kombination aus Fahrzeug (2) und Turbinensystem nach einem der vorherigen Ansprüche **dadurch gekennzeichnet, dass** die Turbine eine Windturbine (11) ist.

4. Kombination aus Fahrzeug (2) und Turbinensystem nach dem vorherigen Anspruch **dadurch gekennzeichnet, dass** die Windturbine (11) 1 bis 7, bevorzugt 2 bis 4 und besonders bevorzugt 3 Rotorblätter (34) aufweist.

5. Kombination aus Fahrzeug (2) und Turbinensystem nach einem der vorherigen Ansprüche 2 oder 3 **dadurch gekennzeichnet, dass** das Turbinensystem eine Drehmomentübertragungseinheit umfasst, mit welcher das Drehmoment der Windturbine (11) an eine Drehwelle des Motors des Fahrzeuges (2) mechanisch koppelbar ist.

6. Kombination aus Fahrzeug (2) und Turbinensystem nach dem vorherigen Anspruch **dadurch gekennzeichnet, dass** die Drehmomentübertragungseinheit eine Fliehkraftkupplung mit integriertem Freilauf umfasst.

7. Kombination aus Fahrzeug (2) und Turbinensystem nach einem der vorherigen Ansprüche **dadurch gekennzeichnet, dass** das Turbinensystem einen Generator (82) umfasst und die Turbine (10) den Generator (82) zur Erzeugung von elektrischem Strom antreibt.

8.  Kombination aus Fahrzeug (2) und Turbinensystem nach dem vorherigen Anspruch **dadurch gekennzeichnet, dass** das Fahrzeug (2) einen Elektromotor und/oder einen Hybridmotor umfasst und der elektrische Strom für den Antrieb des Elektromotors und/oder des Hybridmotors bereitgestellt wird.

9.  Kombination aus Fahrzeug (2) und Turbinensystem nach dem vorherigen Anspruch **dadurch gekennzeichnet, dass** das Fahrzeug (2) ein oder mehrere elektrische Geräte umfasst, bevorzugt ausgewählt aus einer Gruppe umfassend Klimaanlage, Musikanlage, Kühlaggregat, Beleuchtungsmittel, Bordcomputer, Navigationsgerät, TV-Gerät und/oder Fahrerassistenzsystem und der elektrische Strom für den Betrieb des einen oder mehreren elektrischen Gerätes bereitgestellt wird.

10. Kombination aus Fahrzeug (2) und Turbinensystem nach einem der vorherigen Ansprüche 1, 2 und/oder 7-9 **dadurch gekennzeichnet, dass** die Turbine (10) eine Gasturbine (90) bevorzugt ein Aero-Derivativ zur Erzeugung von elektrischem Strom ist.

11. Kombination aus Fahrzeug (2) und Turbinensystem nach einem der vorherigen Ansprüche **dadurch gekennzeichnet, dass** das Fahrzeug (2) ein Lastkraftwagen, ein Personenkraftwagen, ein Flugobjekt und/oder ein Zug ist.

12. Kombination aus Fahrzeug (2) und Turbinensystem nach einem der vorherigen Ansprüche **dadurch gekennzeichnet, dass** das Windschild (16) am oberen Ende mit Hilfe eines Gestänges (36) an einem an dem Fahrzeuggehäuse befestigten Überrollbügel (38) angebracht vorliegt und das Windschild (16) am unteren Ende mit Hilfe einer Trägerplatte am Fahrgestell des Fahrzeuges (2) befestigt ist.

13. Kombination aus Fahrzeug (2) und Turbinensystem nach einem der vorherigen Ansprüche **dadurch gekennzeichnet, dass** die Turbine Rotorblätter umfasst und das Windschild (16) an den äußeren Ende der Rotorblätter (34) angebracht ist, sodass das Windschild (16) mit den Rotorblätter rotiert.

**Claims**

1.  Combination of vehicle (2) and turbine system for fuel saving in the vehicle (2),
    the turbine system comprising a turbine (10) and a turbine mount (12) with a windshield (16), the windshield (16) and the turbine (10) having a cross-sectional area which is at least 60%, preferably at least 80% and more preferably at least 90% of the frontal projection area of the vehicle and the turbine (10) is attached by means of a turbine mount (12) on the vehicle front and / or on a chassis
    in front of the vehicle front,
    the windshield (16) being an annular housing which surrounds the turbine (10) and has an outer contour whose distance from the axis of rotation of the turbine increases towards the side of the windshield facing the vehicle (2), the increase in the distance between the outer contour of the windshield (16) and the axis of the turbine **characterizing by** a pitch angle of 5° to 35°
    and the outer contour of the windshield (16) in the frontal projection is not circular, but is adapted to the shape of the frontal projection area of the vehicle front and preferably forms a rounded rectangle.

2.  Combination of vehicle and turbine system according to the previous claim **characterized in that** the distance between the turbine (10) and the front of the vehicle is between 10 and 200%, preferably between 20% and 90% and particularly preferably between 30% and 80% of the diameter of the turbine (10).

3.  Combination of vehicle (2) and turbine system according to one of the preceding claims **characterized in that** the turbine is a wind turbine (11).

4.  Combination of vehicle (2) and turbine system to the previous claim **characterized in that** the wind turbine (11) has 1 to 7, preferably 2 to 4 and more preferably 3 rotor blades (34).

5.  Combination of vehicle (2) and turbine system according to one of the preceding claims 2 or 3 **characterized in that** the turbine system
    comprises a torque transmission unit which transmits mechanically the torque of the wind turbine (11) to the rotary shaft of the engine of the vehicle (2).

**6.** Combination of vehicle (2) and turbine system according to the previous claim
**characterized in that** the torque transmission unit comprises a centrifugal clutch with integrated freewheel.

**7.** Combination of vehicle (2) and turbine system according to one of the preceding claims
**characterized in that** the turbine system comprises a generator (82) and the turbine (10) drives the generator (82) to generate electrical power.

**8.** Combination of vehicle (2) and turbine system according to the previous claim
**characterized in that** the vehicle (2) comprises an electric motor and / or a hybrid motor and the electrical current for driving the electric motor and / or the hybrid motor is provided.

**9.** Combination of vehicle (2) and turbine system according to the previous claim
**characterized in that** the vehicle (2) comprises one or more electrical devices, preferably selected from a group comprising air conditioning, music system, refrigeration unit, lighting means, onboard computer, navigation device, TV set and / or driver assistance system and the electrical current for the operation of the one or more electrical device is provided.

**10.** Combination of vehicle (2) and turbine system according to one of the preceding claims 1, 2 and / or 7 - 9
**characterized in that** the turbine (10) is a gas turbine (90), preferably an aeroderivative for generating electrical power.

**11.** Combination of vehicle (2) and turbine system according to one of the preceding claims
**characterized in that** the vehicle (2) is a truck, a passenger car, a flying object and / or a train.

**12.** Combination of vehicle (2) and turbine system according to one of the preceding claims
**characterized in that** the windshield (16) is fixed at the upper end by means of a linkage (36) attached to a roll bar (38) mounted on the vehicle housing and the windshield (16) is attached at the lower end by means of a support plate on the chassis of the vehicle (2).

**13.** Combination of vehicle (2) and turbine system according to one of the preceding claims
**characterized in that** the turbine comprising rotor blades and the windshield (16) is attached to the outer end of the rotor blades (34) so that the windshield (16) rotates with the rotor blades.

**Revendications**

**1.** Combinaison de véhicule (2) et de système de turbine pour économiser le carburant dans le véhicule (2), le système de turbine comprenant une turbine (10) et un support de turbine (12) ayant un bouclier contre le vent (16), le bouclier contre le vent (16) et la turbine (10) ont une section transversale qui représente au moins 60 %, de préférence au moins 80 % et surtout de préférence au moins 90 % de la surface de projection frontale du véhicule, et la turbine (10) est attaché à l'avant du véhicule et/ou sur un châssis à l'avant du véhicule à l'aide du support de la turbine (12),
le bouclier contre le vent (16) étant un boîtier annulaire qui entoure la turbine (10) et a une contour extérieur dont la distance par rapport à l'axe de rotation de la turbine augmente vers le côté de le bouclier contre le vent qui fait face au véhicule (2),
l'augmentation de la distance entre le contour extérieur de le bouclier contre le vent (16) et l'axe de la turbine étant **caractérisé par** un angle de tangage
de 5° à 35°
et le contour extérieur de le bouclier contre le vent (16) dans la projection frontale n'est pas circulaire, mais est adapté à la forme de la zone de projection frontale de l'avant du véhicule et de preference forme un rectangle arrondi.

**2.** Combinaison de véhicule et de système de turbine selon la revendication précédente
**caractérisé en ce que**
la distance entre la turbine (10) et l'avant du véhicule est comprise entre 10 et 200%, de préférence entre 20% et 90% et plus de préférence entre 30% et 80% du diamètre de la turbine (10).

**3.** Combinaison de véhicule (2) et de système de turbine selon l'une des revendications précédentes
**caractérisé en ce que** la turbine est une éolienne (11).

**4.** Combinaison de véhicule (2) et de système de turbine selon la revendication précédente **caractérisé en ce que** l'éolienne (11) a 1 à 7, de préférence 2 à 4 et plus de préférence 3 pales de rotor (34).

**5.** Combinaison de véhicule (2) et de système de turbine selon l'une des revendications précédentes 2 ou 3 **caractérisé en ce que** le système de turbine comprend une unité de transmission de couple qui transmet mécaniquement le couple de l'éolienne (11) à l'arbre rotatif du moteur du véhicule (2).

**6.** Combinaison de véhicule (2) et de système de turbine selon la revendication précédente **caractérisé en ce que** l'unité de transmission de couple comprend un embrayage centrifuge avec roue libre intégrée.

**7.** Combinaison de véhicule (2) et de système de turbine selon l'une des revendications précédentes **caractérisé en ce que** le système de turbine comprend un générateur (82) et la turbine (10) entraîne le générateur (82) pour générer de l'énergie électrique.

**8.** Combinaison de véhicule (2) et de système de turbine selon la revendication précédente **caractérisé en ce que** le véhicule (2) comprend un moteur électrique et / ou moteur hybride et le courant électrique pour l'entraînement du moteur électrique et / ou le moteur hybride est fourni.

**9.** Combinaison de véhicule (2) et de système de turbine selon la revendication précédente **caractérisé en ce que** le véhicule (2) comprend un ou plusieurs appareils électriques, choisis de préférence dans un groupe comprenant la climatisation, le système de musique, l'unité de refrigeration, moyens d'éclairage, ordinateur de bord, appareil de navigation, téléviseur et / ou système d'aide à la conduite et le courant électrique pour le fonctionnement de le ou les électriques l'appareil est fourni.

**10.** Combinaison de véhicule (2) et de système de turbine selon l'une des revendications précédentes 1, 2 et / ou 7 - 9 **caractérisé en ce que** la turbine (10) est une turbine à gaz (90), de préférence un aérodérivative pour générer de le courant électrique.

**11.** Combinaison de véhicule (2) et de système de turbine selon l'une des revendications précédentes **caractérisé en ce que** le véhicule (2) est un camion, une voiture de tourisme, un objet volant et / ou un train.

**12.** Combinaison de véhicule (2) et de système de turbine selon l'une des revendications précédentes **caractérisé en ce que** le bouclier contre le vent (16) est fixé à l'extrémité supérieure au moyen d'un tringlerie (36) fixée à un arceau de sécurité (38) monté sur le boîtier du véhicule et le bouclier contre le vent (16) est fixé à l'extrémité inférieure au moyen d'une plaque de support sur le châssis du véhicule (2).

**13.** Combinaison de véhicule (2) et de système de turbine selon l'une des revendications précédentes **caractérisé en ce que** la turbine comprend des pales de rotor et le bouclier contre le vent (16) est fixé à l'extrémité extérieure des pales de rotor (34) de sorte que le bouclier contre le vent (16) tourne avec les pales du rotor.

**Fig. 1**

10, 11

18

12

16

20

1

14

10, 11

1

Fig. 2

**Fig. 3**

**Fig. 4**

1

10, 11

12

20

**Fig. 5**

10, 11

34

**Fig. 6**

42

16

1

50

36;12

38;12

40

44

48

46

**Fig. 7**

**Fig. 8**

| a | b | c | d | e | f |
|---|---|---|---|---|---|
| 200 | 120 | 180 | 1250 | 440 | 200 |

**Modellbreite: 290mm**                                    **Maße in mm**

Fig. 9

**Fig. 10**

Fig. 11

Fig. 12

Fig. 13

**Fig. 14**

**Fig. 15**   A

88

16

10, 11

1

86

88

B

C

16   10, 11

16

10, 11

**Fig. 16**

88

10, 90

16

86

1

Fig. 17

Cw-Wert

0,7

ohne Windturbine

mit Windturbine

0   10   20   30   40   50   60   70   80
Fahrtwind-Widerstand in [kW]

0,5

ohne Windturbine

mit Windturbine

0   10   20   30   40   50   60   70   80
Fahrtwind-Widerstand in [kW]

0,3

ohne Windturbine

mit Windturbine

0   10   20   30   40   50   60   70   80
Fahrtwind-Widerstand in [kW]

■ Fahrtwind-Widerstandsanteil LKW
▨ Fahrtwind-Widerstandsanteil Windturbine

**EP 3 405 671 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 202008015733 U1
- DE 20308468 U1
- CH 700463 A2
- US 20080011523 A1

### In der Beschreibung aufgeführte Nicht-Patentliteratur

- **GASCH ; ROBERT ; TWELE ; JOCHEN.** Windkraftanlagen. Vieweg Teubner, Januar 1955
- **GASCH ; ROBERT.** Windkraftanlagen. Teubner Stuttgart, 157
- **GASCH ; ROBERT ; TWELE ; JOCHEN.** Windkraftanlagen. Vieweg Teubner, 155
- **GASCH ; ROBERT.** Windkraftanlagen. B.G. Teubner Stuttgart, 157
- **GASH ; ROBERT.** Windkraftanlagen. B.G. Teubner Stuttgart, 157
- Boh/Elmendorf, Strömungsmaschinen 1 (Fluidmachine 1). Kamprath-Reihe. 221